# EUROPEAN PATENT APPLICATION

(11) **EP 4 766 005 A1**
(43) Date of publication of application: **24.06.2026**
(21) Application number: 25776643.6
(22) Date of filing: 23.01.2025
(51) Int. Cl.: H04W 76/10

(54) **NETWORKING METHOD AND TERMINAL**

(30) Priority: 26.03.2024 CN 202410359206; 10.05.2024 CN 202410578877
(71) Applicant: HUAWEI TECHNOLOGIES CO., LTD., Shenzhen 518129 (CN)
(72) Inventor: ZHANG, Liang, Shenzhen, Guangdong 518129 (CN); XU, Ming, Shenzhen, Guangdong 518129 (CN)
(74) Representative: Gill Jennings & Every LLP
(86) International application number: PCT/CN2025/074437
(87) International publication number: WO 2025/200763

(57) **Abstract**

This application relates to the terminal field, and provides a networking method and a terminal. The method is applied to a first terminal in a terminal set, the terminal set includes at least three terminals, and the method includes: establishing a first connection to a second terminal, where the second terminal is any terminal in the terminal set other than the first terminal; and based on the first connection, sending a first data set to the second terminal, and receiving a second data set sent by the second terminal, where the first data set or the second data set includes networking data and/or authentication data of at least two terminals in the terminal set, and the authentication data is used to authenticate an identity of a terminal. Technical solutions provided in this application can reduce a quantity times for establishing connections between the terminals in the terminal set in a networking process, and improve networking efficiency.

## Description

This application claims priorities to Chinese Patent Application No. 202410359206.7, filed with the China National Intellectual Property Administration on March 26, 2024, and entitled "METHOD FOR REDUCING DATA SYNCHRONIZATION LOAD IN SELF-NETWORKING AND ELECTRONIC DEVICE", and to Chinese Patent Application No. 202410578877.2, filed with the China National Intellectual Property Administration on May 10, 2024, and entitled "NETWORKING METHOD AND TERMINAL", both of which are incorporated herein by reference in their entireties.

### TECHNICAL FIELD

This application relates to the terminal field, and in particular, to a networking method and a terminal.

### BACKGROUND

As terminal technologies continuously develop, various terminals have been widely used in a plurality of scenarios such as a personal scenario, a household scenario, and an industrial scenario. In these scenarios, a plurality of terminals may perform networking for a connection and collaboration, thereby providing more complex and rich services for a user. However, as a quantity of terminals participating in self-networking increases, networking energy efficiency is increasingly concerned.

In a conventional technology, every two of a plurality of terminals participating in networking can establish a connection, to exchange networking data or authentication data. Networking data of each terminal includes address information of the terminal, and may be used by another terminal and the terminal for networking and communication, and authentication data may be used to authenticate an identity of the terminal. Each terminal needs to separately establish a connection to another terminal to obtain networking data or authentication data of each other, resulting in low networking efficiency.

### SUMMARY

In view of this, this application provides a networking method and a terminal, to reduce a quantity times for establishing connections between terminals in a terminal set in a networking process, and improve networking efficiency.

To achieve the foregoing objective, according to a first aspect, an embodiment of this application provides a networking method, applied to a first terminal in a terminal set. The terminal set includes at least three terminals. The method includes: establishing a first connection to a second terminal, where the second terminal is any terminal in the terminal set other than the first terminal; and based on the first connection, sending a first data set to the second terminal, and receiving a second data set sent by the second terminal, where the first data set or the second data set includes networking data and/or authentication data of at least two terminals in the terminal set, and the authentication data is used to authenticate an identity of a terminal.

In this embodiment of this application, the first terminal can establish the first connection to the second terminal, send the first data set to the second terminal, and receive the second data set sent by the second terminal. The first data set or the second data set includes networking data and/or authentication data of at least two terminals in the terminal set. In other words, the first terminal or the second terminal obtains the networking data and/or authentication data of the at least two terminals without establishing connections to all the at least two terminals. This significantly reduces a quantity times for establishing connections between terminals in the terminal set in a networking process, and improves networking efficiency.

In some implementations, the first terminal is a central device, and the second terminal is a leaf device of the first terminal.

In some implementations, the first data set and the second data set are at least partially different.

In some implementations, the first data set includes networking data of the first terminal. In some implementations, the second data set includes networking data of the second terminal.

In some implementations, the first data set may include networking data of all terminals in the terminal set currently stored by the first terminal. In some implementations, the second data set includes networking data of all terminals in the terminal set currently stored by the second terminal.

In some implementations, the first data set includes authentication data of the first terminal. In some implementations, the second data set includes authentication data of the second terminal.

In some implementations, the first data set may include authentication data of all terminals currently stored by the first terminal. In some implementations, the second data set includes authentication data of all terminals currently stored by the second terminal.

In some implementations, the first data set includes pre-synchronized data of the first terminal. In some implementations, the second data set includes pre-synchronized data of the second terminal.

In some implementations, the first data set may include pre-synchronized data of all terminals in the terminal set currently stored by the first terminal. In some implementations, the second data set includes pre-synchronized data of all terminals in the terminal set currently stored by the second terminal.

In some implementations, the first data set includes networking data of each terminal in the terminal set and/or authentication data of each terminal in the terminal set, so that each terminal in the terminal set obtains the networking data and/or authentication data of each terminal in the terminal set without establishing a connection to each terminal in the terminal set. This reduces a quantity times for establishing connections, and improves networking efficiency.

In some implementations, before establishing the first connection to the second terminal, the method further includes: generating a challenge value of the first terminal; sending the challenge value to at least one terminal in the terminal set; and when an election success message sent by a third terminal is not received within first duration starting from a moment at which the challenge value is sent, setting the first terminal as a central device, where the third terminal is any terminal that receives the challenge value in the terminal set.

In some implementations, the method further includes: generating a challenge value of the first terminal; sending the challenge value to at least one terminal in the terminal set; and when an election success message sent by a third terminal is received within the first duration starting from a moment at which the challenge value is sent, setting the first terminal as a leaf device of the third terminal, where the third terminal is any terminal that receives the challenge value in the terminal set.

The central device is elected in the terminal set, and then the central device initiates a connection establishment request to the leaf device of the central device and performs data exchange. This reduces a quantity of connections between terminals in the terminal set from N×(N-1) to N-1.

In some implementations, a quantity of networking data stored by the first terminal is greater than a quantity of networking data stored by the second terminal. In some implementations, every two of a plurality of terminals in the terminal set may first establish a connection with each other for networking and exchange data. Then a terminal that stores a large amount of networking data is configured as a central device, and another terminal in the plurality of terminals is configured as a leaf device of the central device, so that the central device can obtain the networking data of each terminal in the terminal set more quickly, and then the central device sends the networking data to the leaf device. This further improves networking efficiency.

In some implementations, the first terminal is a non-low power consumption device, or an operation mode of the first terminal is a non-low power consumption mode. The central device may need to establish connections with and exchange data with a plurality of leaf devices. Therefore, the central device generates higher power consumption than the leaf device. To ensure that the central device can establish connections with and exchange data with other leaf devices in a timely manner, a device type of the central device is the non-low power consumption device or the operation mode of the central device is the non-low power consumption device.

In some implementations, the first data set or the second data set includes pre-synchronized data of the at least two terminals in the terminal set, the pre-synchronized data is used by the terminals to execute a distributed service, and the distributed service is a service collaboratively executed by the at least two terminals.

In other words, the first terminal and/or the second terminal in the terminal set may be proxies of other terminals in the terminal set to exchange pre-synchronized data. The first terminal and/or the second terminal can obtain the pre-synchronized data of the other terminals without establishing connections with the other terminals. This reduces a quantity times for establishing connections in the terminal set in the networking process, and improves networking efficiency.

In some implementations, the first data set includes pre-synchronized data of each terminal in the terminal set, so that each terminal in the terminal set obtains the pre-synchronized data of each terminal in the terminal set without establishing a connection to each terminal in the terminal set. This reduces a quantity times for establishing connections, and improves networking efficiency.

In some implementations, the first data set includes pre-synchronized data of the first terminal, and after sending the first data set to the second terminal, the method further includes: notifying the second terminal that the first terminal goes online; and executing a first distributed service based on the pre-synchronized data of the first terminal, where the first distributed service is collaboratively executed by the first terminal and the second terminal.

In some implementations, before sending the first data set to the second terminal, the method further includes: if an update frequency of a first part of data of the first distributed service is less than a first update frequency, setting the first part of data as the pre-synchronized data of the first terminal.

The first terminal can determine the pre-synchronized data of the first terminal, and synchronize, before notifying the second terminal of going online, the pre-synchronized data with the second terminal by establishing a connection once, so that after notifying the second terminal of going online, the first terminal and the second terminal can interact with each other and process a distributed service based on the synchronized pre-synchronized data. This reduces a frequency of establishing, after the first terminal goes online, a connection to the second terminal to synchronize data, improves efficiency of networking the first terminal with the second terminal and efficiency of processing the distributed service, saves a device resource like a link occupied by data synchronization, and ensures a success rate of establishing a connection when the first terminal and the second terminal process another distributed service.

In some implementations, after notifying the second terminal that the first terminal goes online, the method further includes: establishing a second connection to the second terminal in response to a request that is of the first distributed service and that is for synchronization with the second terminal; and sending a second part of data of the first distributed service to the second terminal based on the second connection, where the second part of data does not belong to the first data set.

In some implementations, the method further includes one or more of the following: when being connected to a server, sending at least a part of data of the first data set to the server; and obtaining at least a part of data of the second data set from the server, where the connection includes that the first terminal logs in to the server, the first terminal is powered on and connected to the server, and the server pushes a message to the first terminal.

In some implementations, the method further includes one or more of the following: when being connected to a server, sending one or more of networking data, authentication data, and pre-synchronized data of the first terminal to the server; and obtaining one or more of networking data, authentication data, and pre-synchronized data of at least one terminal in the terminal set from the server.

Any terminal in the terminal set can upload networking data, authentication data, and pre-synchronized data of the terminal to the server when being connected to the server, and obtain networking data, authentication data, and pre-synchronized data of at least one other terminal in the terminal set from the server. In other words, any two terminals in the terminal set may complete data exchange and data synchronization via the server, without establishing a connection between the any two terminals. This reduces a quantity times for establishing connections between terminals in the networking process, and improves networking efficiency.

In some implementations, the method further includes: in response to a request that is initiated by a second distributed service and that is for establishing a third connection to the second terminal, where the second distributed service is in a foreground of the first terminal and the first terminal does not have an idle link resource, disconnecting a fourth connection between the first terminal and a fourth terminal, where the second distributed service is collaboratively executed by the first terminal and the second terminal, the fourth terminal is any terminal in the terminal set other than the first terminal and the second terminal, the fourth connection is created by a third distributed service in a background of the first terminal, and the third distributed service is collaboratively executed by the first terminal and the fourth terminal; and establishing the third connection.

In some implementations, after establishing the third connection, the method further includes: if the first terminal has the idle link resource, resuming the fourth connection.

When the first terminal detects the request initiated by the second distributed service, the second distributed service is in the foreground of the first terminal, and the request is used to request to establish the third connection to the second terminal, the first terminal can determine whether the idle link resource exists currently. When the idle link resource does not exist, the first terminal can freeze a link resource occupied by at least a part of a distributed service in the background, and establish the third connection to the second terminal in response to the request. This improves a success rate of establishing a connection triggered by a distributed service in the foreground.

According to a second aspect, an embodiment of this application provides a networking method, applied to a first terminal and a second terminal in a terminal set. The terminal set includes at least three terminals. The method includes: The first terminal establishes a first connection to the second terminal; the first terminal sends a first data set to the second terminal based on the first connection; and the second terminal sends a second data set to the first terminal based on the first connection, where the first data set or the second data set includes networking data and/or authentication data of at least two terminals in the terminal set, and the authentication data is used to authenticate an identity of a terminal.

In some implementations, the first data set includes networking data of each terminal in the terminal set and/or authentication data of each terminal in the terminal set.

In some implementations, a quantity of networking data stored by the first terminal is greater than a quantity of networking data stored by the second terminal.

In some implementations, the first data set or the second data set includes pre-synchronized data of the at least two terminals in the terminal set, the pre-synchronized data is used by the terminals to execute a distributed service, and the distributed service is a service collaboratively executed by the at least two terminals.

In some implementations, the first data set includes pre-synchronized data of the first terminal, and after sending the first data set to the second terminal, the method further includes: notifying the second terminal that the first terminal goes online; and executing a first distributed service based on the pre-synchronized data of the first terminal, where the first distributed service is collaboratively executed by the first terminal and the second terminal.

In some implementations, before sending the first data set to the second terminal, the method further includes: if an update frequency of a first part of data of the first distributed service is less than a first update frequency, setting the first part of data as the pre-synchronized data of the first terminal.

According to a third aspect, an embodiment of this application provides a terminal. The terminal has a function of implementing the terminal behavior according to the foregoing aspects and the possible implementations of the foregoing aspects. The function may be implemented by hardware, or may be implemented by executing corresponding software by hardware. The hardware or the software includes one or more modules or units corresponding to the foregoing function, for example, a communication module and a processing module. The communication module may be configured to establish a connection and communicate with another device by the terminal, and the processing module may be configured to process a distributed service, determine pre-synchronized data, generate a challenge value, allocate a link resource, and the like.

According to a fourth aspect, an embodiment of this application provides a terminal, including a memory and a processor. The memory is configured to store a computer program. The processor is configured to perform the method according to any one of the first aspect when invoking the computer program.

According to a fifth aspect, an embodiment of this application provides a chip system. The chip system includes a processor. The processor is coupled to a memory, and the processor executes a computer program stored in the memory, to implement the method according to any one of the first aspect.

The chip system may be a single chip or a chip module including a plurality of chips.

According to a sixth aspect, an embodiment of this application provides a computer-readable storage medium. The computer-readable storage medium stores a computer program. When the computer program is executed by a processor, the method according to any one of the first aspect is implemented.

According to a seventh aspect, an embodiment of this application provides a computer program product. When the computer program product runs on a terminal, the terminal is enabled to perform the method according to any one of the first aspect.

It may be understood that for beneficial effect of the second aspect to the seventh aspect, refer to related descriptions in the first aspect. Details are not described herein again.

### BRIEF DESCRIPTION OF DRAWINGS

FIG. 1 is a diagram of a structure of a terminal according to an embodiment of this application;
FIG. 2 is a block diagram of a structure of a communication system according to an embodiment of this application;
FIG. 3 is a block diagram of a structure of another communication system according to an embodiment of this application;
FIG. 4 is a block diagram of a structure of another communication system according to an embodiment of this application;
FIG. 5 is a diagram of a structure of a network topology according to an embodiment of this application;
FIG. 6 is a diagram of a structure of another network topology according to an embodiment of this application;
FIG. 7 is a schematic flowchart of a networking method according to an embodiment of this application;
FIG. 8 is a schematic flowchart of another networking method according to an embodiment of this application;
FIG. 9 is a diagram of a structure of another network topology according to an embodiment of this application;
FIG. 10 is a diagram of a structure of another network topology according to an embodiment of this application;
FIG. 11 is a schematic flowchart of another networking method according to an embodiment of this application;
FIG. 12 is a schematic flowchart of a central device configuration method according to an embodiment of this application;
FIG. 13 is a schematic flowchart of another central device configuration method according to an embodiment of this application;
FIG. 14A to FIG. 14C are a schematic flowchart of a data exchange method according to an embodiment of this application;
FIG. 15 is a schematic flowchart of another data exchange method according to an embodiment of this application;
FIG. 16 is a schematic flowchart of another networking method according to an embodiment of this application;
FIG. 17 is a schematic flowchart of another networking method according to an embodiment of this application;
FIG. 18 is a diagram of a structure of another network topology according to an embodiment of this application;
FIG. 19A and FIG. 19B are a schematic flowchart of another networking method according to an embodiment of this application;
FIG. 20 is a schematic flowchart of a data synchronization method according to an embodiment of this application;
FIG. 21 is a schematic flowchart of a connection establishment method according to an embodiment of this application;
FIG. 22 is a schematic flowchart of another connection establishment method according to an embodiment of this application;
FIG. 23 is a schematic flowchart of a link resource allocation method according to an embodiment of this application;
FIG. 24 is a schematic flowchart of another link resource allocation method according to an embodiment of this application;
FIG. 25 is a schematic flowchart of another networking method according to an embodiment of this application; and
FIG. 26 is a schematic flowchart of another networking method according to an embodiment of this application.

### DESCRIPTION OF EMBODIMENTS

A networking method provided in embodiments of this application may be applied to a terminal like a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal is not limited in embodiments of this application.

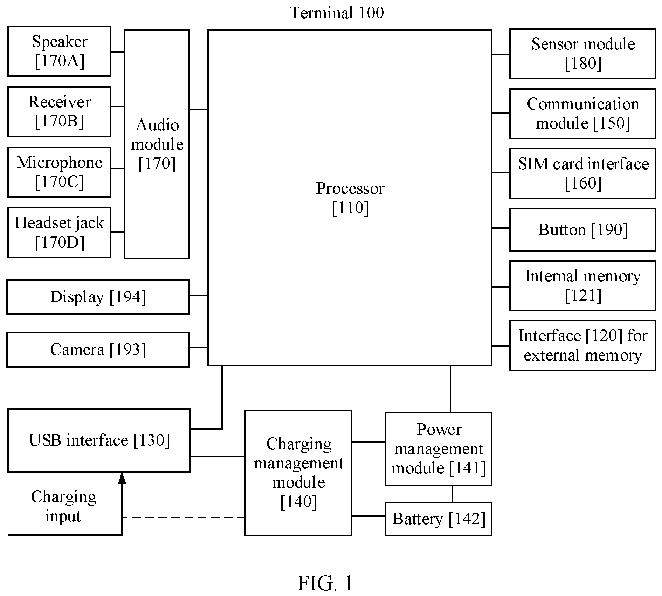

FIG. 1 is a diagram of a structure of a terminal 100 according to an embodiment of this application. The terminal 100 may include a processor 110, an interface 120 for external memory, an internal memory 121, a universal serial bus (universal serial bus, USB) interface 130, a charging management module 140, a power management module 141, a battery 142, a communication module 150, a subscriber identity module (subscriber identification module, SIM) card interface 160, an audio module 170, a speaker 170A, a receiver 170B, a microphone 170C, a headset jack 170D, a sensor module 180, a button 190, a motor 191, an indicator 192, a camera 193, a display 194, and the like.

It may be understood that the structure shown in this embodiment of this application does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

For example, one or more components other than the processor 110, the communication module 150, and the internal memory 121 in FIG. 1 may be omitted. For example, if being a mobile phone, a wearable device, or an internet of things device, the terminal 100 may include the SIM card interface 160. If being a notebook computer, the terminal 100 may not include the SIM card interface. Alternatively, if being a smart audio, the terminal 100 may not include the display 194. If being an intelligent lock, the terminal may include the display 194.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. When charging the battery 142, the charging management module 140 may further supply power to the terminal via the power management module 141.

The power management module 141 is configured to connect to the battery 142, the charging management module 140, and the processor 110. The power management module 141 receives an input of the battery 142 and/or an input of or the charging management module 140, and supplies power to the processor 110, the internal memory 121, an external memory, the display 194, the camera 193, the communication module 150, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

The communication module 150 may provide a wireless communication solution that includes 2G/3G/4G/5G or the like and that is applied to the terminal 100, and/or may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal 100. A wireless communication function of the terminal 100 may be implemented via the communication module 150, the modem processor, the baseband processor, and the like.

The display 194 is configured to display an image, a video, and the like. The display 194 includes a display panel. The terminal 100 may implement a display function via the GPU, the display 194, the application processor, and the like.

The camera 193 is configured to capture a static image or a video. The terminal 100 may implement a photographing function via the ISP, the camera 193, the video codec, the GPU, the display 194, the application processor, and the like.

The interface 120 for external memory may be configured to connect to an external memory card, for example, a micro SD card, to extend a storage capability of the terminal 100. The external memory card communicates with the processor 110 via the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a sound playing function or an image playing function), and the like. The data storage area may store data (such as audio data and a phone book) created in use of the terminal 100. In addition, the internal memory 121 may include a high-speed random access memory, or may include a non-volatile memory, for example, at least one magnetic disk storage device, a flash memory device, or a universal flash storage (universal flash storage, UFS).

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode over the speaker 170A.

The receiver 170B, also referred to as an "earpiece", is configured to convert an electrical audio signal into a sound signal. When a call is answered or speech information is received via the terminal 100, the receiver 170B may be put close to a human ear to listen to a speech.

The microphone 170C, also referred to as a "mike" or a "mic", is configured to convert a sound signal into an electrical signal. When making a call or sending speech information, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be the USB interface 130 or a 3.5 mm open mobile terminal platform (open mobile terminal platform, OMTP) standard interface or a cellular telecommunications industry association of the USA (cellular telecommunications industry association of the USA, CTIA) standard interface.

The terminal 100 may implement an audio function such as music playing or recording via the audio module 170, the speaker 170A, the receiver 170B, the microphone 170C, the headset jack 170D, the application processor, and the like.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The terminal 100 may receive a button input, and generate a button signal input related to user setting and function control of the terminal 100.

The SIM card interface 160 is configured to connect to a SIM card. The SIM card may be inserted into the SIM card interface 160 or removed from the SIM card interface 160, to implement contact with or separation from the terminal 100. In some embodiments, the terminal 100 uses an eSIM, namely, an embedded SIM card. The eSIM card may be embedded in the terminal 100, and cannot be separated from the terminal 100.

To facilitate understanding of technical solutions in embodiments of this application, the following first describes an application scenario of embodiments of this application.

As terminal technologies continuously develop, various terminals have been widely used in a plurality of scenarios such as a personal scenario, a household scenario, and an industrial scenario. In these scenarios, a plurality of terminals may perform networking for a connection and collaboration, thereby providing more complex and rich services for a user. However, as a quantity of terminals participating in self-networking increases, networking energy efficiency is increasingly concerned.

The following describes communication systems in different scenarios such as the personal scenario, the household scenario, and the industrial scenario.

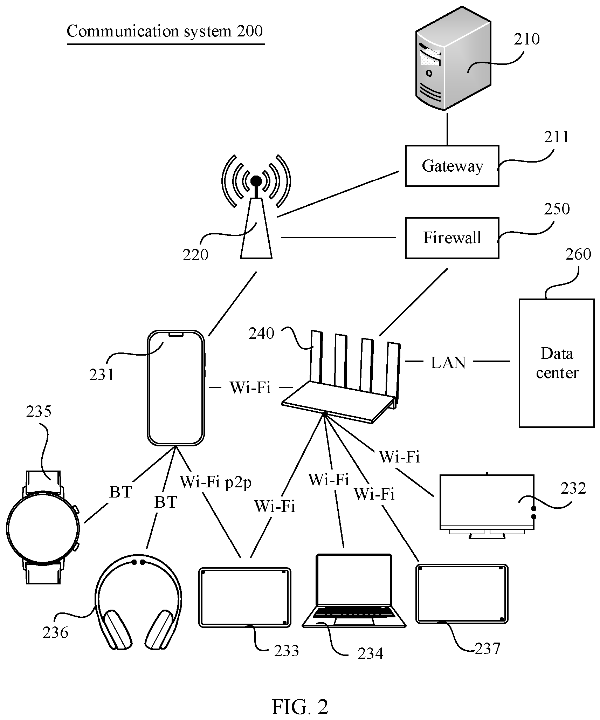

FIG. 2 is a diagram of a structure of a communication system applicable to a personal scenario according to an embodiment of this application.

As shown in FIG. 2, the communication system 200 may include a core network device 210, at least one access network device 220, and at least one terminal, for example, a mobile phone 231, a smart television 232, a tablet computer 233, a notebook computer 234, a smartwatch 235, a smart headset 236, and a computer 237. The terminal may be communicatively connected to the access network device 220 directly or indirectly. The access network device 220 may be communicatively connected to the core network device 210 directly or indirectly, to connect the terminal to a network.

A communication manner between the access network device 220 and the core network device 210 is not specifically limited in embodiments of this application. For example, the access network device 220 may establish a radio link with the core network device 210 via a gateway 211, or the access network device 220 may directly establish a radio link with the core network device 210.

Similarly, a communication manner between the terminal and the access network device 220 is not specifically limited in embodiments of this application.

In some embodiments, the terminal may directly establish a radio link with the access network device 220.

For example, as shown in FIG. 2, the mobile phone 231 may directly establish a radio link with the access network device 220, to implement communication between the mobile phone 231 and the access network device 220.

In some other embodiments, the terminal may establish a radio link with the access network device 220 via a router 240, a firewall 250, and the like.

For example, as shown in FIG. 2, the mobile phone 231, the smart television 232, the tablet computer 233, the notebook computer 234, and the computer 237 may establish a radio link with the access network device 220 via the router 240 and the firewall 250.

A communication manner between the router 240 and each of the mobile phone 231, the smart television 232, the tablet computer 233, the notebook computer 234, and the computer 237 is not specifically limited in embodiments of this application. For example, the mobile phone 231, the smart television 232, the tablet computer 233, the notebook computer 234, and the computer 237 may communicate with the router 240 over a Wi-Fi network.

In some other embodiments, the terminal may establish a radio link to the access network device 220 via an intermediate device.

For example, as shown in FIG. 2, the tablet computer 233, the smartwatch 235, and the smart headset 236 may establish a radio link to the access network device 220 via the mobile phone 231.

A communication manner between the mobile phone 231 and each of the tablet computer 233, the smartwatch 235, and the smart headset 236 is not specifically limited in embodiments of this application. For example, the tablet computer 233 may communicate with the mobile phone 231 through Wi-Fi peer-to-peer (Wi-Fi peer-to-peer, Wi-Fi p2p), and the smartwatch 235 and the smart headset 236 may communicate with the mobile phone 231 through BT.

For example, the communication system 200 may further include at least one data center 260. In this embodiment of this application, the data center 260 may be communicatively connected to the access network device 220, to connect the data center 260 to the network. The data center 260 may be configured to receive and send data, store data, process data, or the like.

A communication manner between the data center 260 and the access network device 220 is not specifically limited in embodiments of this application. For example, the data center 260 may establish a radio link with the access network device 220 via the router 240 and the firewall 250.

A communication manner between the data center 260 and the router 240 is not specifically limited in embodiments of this application. For example, the data center 260 may communicate with the router 240 over a local area network (local area network, LAN).

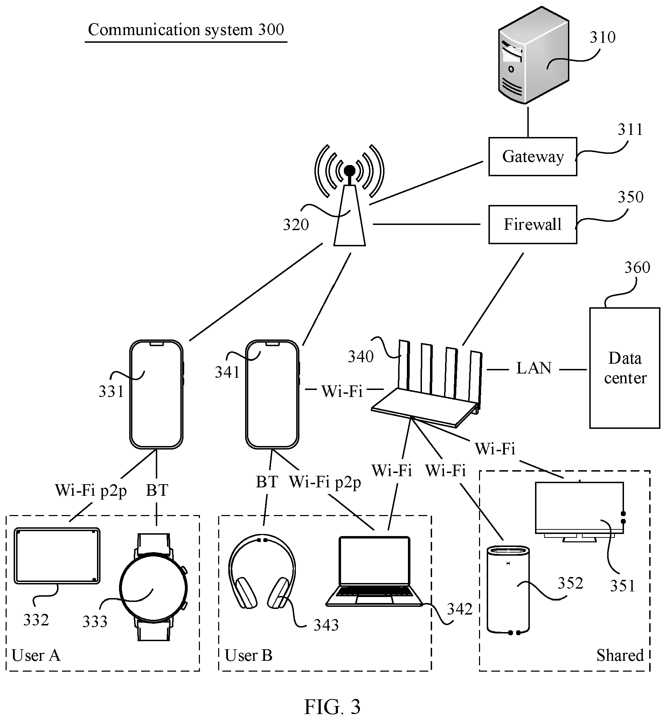

FIG. 3 is a diagram of a structure of a communication system applicable to a household scenario according to an embodiment of this application.

As shown in FIG. 3, the communication system 300 may include a core network device 310, at least one access network device 320, and at least one terminal like a mobile phone 331, a smartwatch 332, and a tablet computer 333 of a user A, a mobile phone 341, a notebook computer 342, and a smart headset 343 of a user B, and a smart television 351 and an air purifier 352 that are shared by a family. The terminal may be communicatively connected to the access network device 320 directly or indirectly. The access network device 320 may be communicatively connected to the core network device 310 directly or indirectly, to connect the terminal to a network.

A communication manner between the access network device 320 and the core network device 310 is not limited in embodiments of this application. For example, the access network device 320 may establish a radio link with the core network device 310 via a gateway 311, or the access network device 320 may directly establish a radio link with the core network device 310.

Similarly, a communication manner between the terminal and the access network device 320 is not specifically limited in embodiments of this application.

For example, as shown in FIG. 3, the mobile phone 331 of the user A and the mobile phone 341 of the user B may directly establish a radio link with the access network device 320. For example, the mobile phone 341 of the user B, the notebook computer 342 of the user B, the smart television 351, and the air purifier 352 may establish a radio link with the access network device 320 via a router 340 and a firewall 350.

A communication manner between the router 340 and each of the mobile phone 341 and the notebook computer 342 that are of the user B, the smart television 351, and the air purifier 352 is not specifically limited in embodiments of this application. For example, the mobile phone 341 and the notebook computer 342 that are of the user B, the smart television 351, and the air purifier 352 may communicate with the router 340 over a Wi-Fi network.

For example, as shown in FIG. 3, the tablet computer 333 and the smartwatch 332 that are of the user A may establish a radio link with the access network device 320 via the mobile phone 331 of the user A. The notebook computer 342 and the smart headset 343 that are of the user B may establish a radio link with the access network device 320 via the mobile phone 341 of the user B.

A communication manner between the mobile phone 331 and each of the tablet computer 333 and the smartwatch 332 is not specifically limited in embodiments of this application. For example, the tablet computer 333 may communicate with the mobile phone 331 through Wi-Fi p2p, and the smartwatch 332 may communicate with the mobile phone 331 through BT. Similarly, the notebook computer 342 may communicate with the mobile phone 341 through Wi-Fi p2p, and the smart headset 343 may communicate with the mobile phone 341 through BT.

For example, the communication system 300 may further include at least one data center 360. In this embodiment of this application, the data center 360 may be communicatively connected to the access network device 320, to connect the data center 360 to the network. The data center 360 may be configured to receive and send data, store data, process data, or the like.

A communication manner between the data center 360 and the access network device 320 is not specifically limited in embodiments of this application. For example, the data center 360 may establish a radio link with the access network device 320 via the router 340 and the firewall 350.

A communication manner between the data center 360 and the router 340 is not specifically limited in embodiments of this application. For example, the data center 360 may communicate with the router 340 over a LAN.

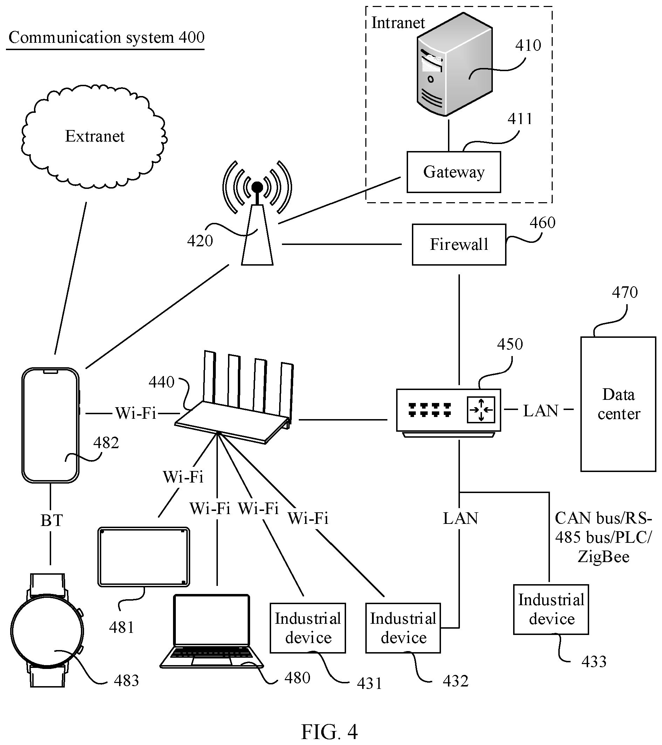

FIG. 4 is a diagram of a structure of a communication system applicable to an industrial scenario according to an embodiment of this application.

As shown in FIG. 4, the communication system 400 may include an industrial intranet. The industrial intranet may be for network connections of terminals (the terminals in an industrial production environment may be referred to as industrial devices below) in an industrial production environment. At least one core network device 410 may be deployed in the industrial intranet. The communication system 400 may further include at least one access network device 420 and at least one industrial device, for example, an industrial device 431, an industrial device 432, and an industrial device 433. It should be understood that the industrial device may be communicatively connected to the access network device 420 directly or indirectly. The access network device 420 may be communicatively connected to the core network device 410 directly or indirectly, to connect the industrial device to the industrial intranet.

A type of the industrial device is not specifically limited in embodiments of this application. For example, the industrial device may include a coal winning machine, a machine tool, a mechanical device, or an instrument.

A communication manner between the access network device 420 and the core network device 410 is not limited in embodiments of this application. For example, the access network device 420 may establish a radio link with the core network device 410 via a gateway 411, or the access network device 420 may directly establish a radio link with the core network device 410.

Similarly, a communication manner between the industrial device and the access network device 420 is not specifically limited in embodiments of this application.

For example, as shown in FIG. 4, the industrial device 431 and the industrial device 432 may establish a radio link with the access network device 420 via a router 440, a core router 450, and a firewall 460.

For example, as shown in FIG. 4, the industrial device 432 and the industrial device 433 may establish a radio link with the access network device 420 via a core router 450, and a firewall 460.

A communication manner between the router 440 and each of the industrial device 431 and the industrial device 432 is not specifically limited in embodiments of this application. For example, the industrial device 431 and the industrial device 432 may communicate with the router 440 over a Wi-Fi network. Similarly, a communication manner between the core router 450 and each of the industrial device 432 and the industrial device 433 is not specifically limited in embodiments of this application. For example, the industrial device 432 may communicate with the core router 450 over a LAN. For example, the industrial device 433 may communicate with the core router 450 through a controller area network (controller area network, CAN) bus, an RS-485 bus, a programmable logic controller (programmable logic controller, PLC), or a ZigBee (ZigBee) technology.

For example, the communication system 400 may further include at least one data center 470. In this embodiment of this application, the data center 470 may be communicatively connected to the access network device 420, to connect the data center 470 to a network. The data center 470 may be configured to receive and send data, store data, process data, or the like.

A communication manner between the data center 470 and the access network device 420 is not specifically limited in embodiments of this application. For example, the data center 470 may establish a radio link with the access network device 420 via the core router 450 and the firewall 460.

A communication manner between the data center 470 and the core router 450 is not specifically limited in embodiments of this application. For example, the data center 470 may communicate with the core router 450 over a LAN.

In some embodiments, the communication system 400 may further include at least one terminal (which may be referred to as a non-industrial device below) that is not for industrial production, for example, a notebook computer 480, a tablet computer 481, a mobile phone 482, and a smartwatch 483 shown in FIG. 4.

A network connection manner of the non-industrial device is not specifically limited in embodiments of this application.

For example, the non-industrial device may be connected to the industrial intranet. A manner in which the non-industrial device is connected to the industrial intranet is not specifically limited in embodiments of this application.

For example, as shown in FIG. 4, the notebook computer 480, the tablet computer 481, and the mobile phone 482 may establish a radio link to the access network device 420 via the router 440, the core router 450, and the firewall 460, to connect the notebook computer 480, the tablet computer 481, and the mobile phone 482 to the industrial intranet.

A communication manner between the router 440 and each of the notebook computer 480, the tablet computer 481, and the mobile phone 482 is not specifically limited in embodiments of this application. For example, the notebook computer 480, the tablet computer 481, and the mobile phone may communicate with the router 440 over a Wi-Fi network.

For example, as shown in FIG. 4, the mobile phone 482 may directly establish a radio link with the access network device 420, to connect the mobile phone 482 to the industrial intranet. For example, the smartwatch 483 may indirectly establish a radio link with the access network device 420 via the mobile phone 482, to connect the smartwatch 483 to the industrial intranet. A communication manner between the smartwatch 483 and the mobile phone 482 is not specifically limited in embodiments of this application. For example, the smartwatch 483 may communicate with the mobile phone 482 through BT.

For example, the non-industrial device may alternatively be connected to an industrial extranet. For example, the mobile phone 482 may be connected to an industrial extranet. A manner in which the non-industrial device is connected to the industrial extranet is not specifically limited in embodiments of this application.

It should be noted that classification into the industrial device and the non-industrial device in FIG. 4 is merely an example for explanation, and should not be understood as a limitation on embodiments of this application.

The access network device shown in FIG. 2 to FIG. 4 may be any device having a wireless transceiver function. In some implementations, the access network device may be configured to connect a terminal to a network, so that the terminal can communicate with another device (for example, the core network device described above) in the network. For example, the access network device may include but is not limited to a base station (base station, BS), an evolved NodeB (evolved NodeB, eNodeB), a transmission reception point (transmission reception point, TRP), a next generation NodeB (next generation NodeB, gNB) in a 5G mobile communication system, a next base station in a 6th generation (6th generation, 6G) mobile communication system, a base station in a future mobile communication system, or an access node in a Wi-Fi system.

The core network device shown in FIG. 2 to FIG. 4 may be a device having one or more network services. For example, the network service may include an account service (account service), a quick service (HUAWEI ability gallery, HAG), and a device manager service (device manager service). The account service may be used to authenticate and manage an account for logging in to a terminal. The quick service may be used to send, to a terminal, related data for implementing a card-type quick service. The device management service can be responsible for device connection, disconnection, and status monitoring.

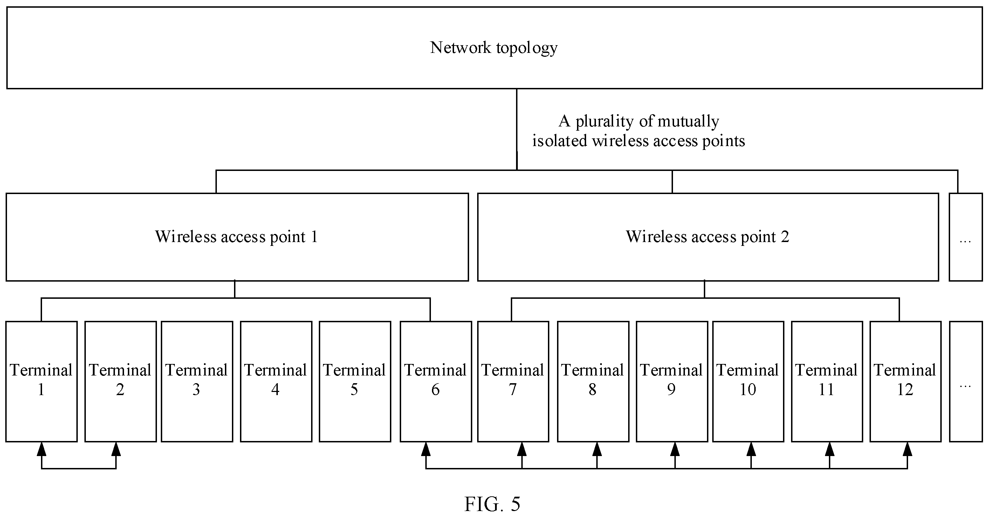

Communication systems in different scenarios such as an individual scenario, a household scenario, and an industrial scenario are used as an example. FIG. 5 shows a network topology of self-networking between a plurality of terminals. The network topology may include a plurality of mutually isolated wireless access points. Each wireless access point can connect to a maximum of 20 terminals. Terminals connected to a same wireless access point (for example, terminals 1 and 2 connected to a wireless access point 1) can support mutual discovery and data transmission through Wi-Fi. Terminals connected to different wireless access points (for example, a terminal 6 connected to the wireless access point 1 and terminals 7 and 8 connected to a wireless access point 2) can perform networking only through Bluetooth. If more than three terminals perform networking through Bluetooth, Bluetooth air interface resources are insufficient, resulting in a low device online rate, a low service connection success rate, and the like. A part of a reason why the foregoing problem occurs in the network topology shown in FIG. 5 is Bluetooth air interface congestion caused by mesh concurrency of a plurality of Bluetooth terminals and serialization of Bluetooth channel instructions. When a plurality of terminals belonging to a same account synchronize data such as a distributed database, a gallery, a camera, a calendar, a memo, and weather data, the plurality of terminals cannot be connected or cannot perform synchronization in time due to Bluetooth air interface congestion. Another part of the reason why the foregoing problem occurs in the network topology shown in FIG. 5 is as follows: In some application scenarios (for example, a terminal store display scenario), there is no network planning and network optimization measure, terminals across wireless access points can perform networking only through Bluetooth, which exceeds a capability supported by a Bluetooth chip, and a bandwidth is affected by collaboration devices across channels. As a result, display is lagging.

From a perspective of a user, when the user uses a terminal to perform a distributed service, the following problems may occur: In a device discovery phase, the terminal cannot discover a peer device. In a device connection phase, the terminal cannot connect to the peer device or connect to the peer device slowly. In a distributed service execution phase, disconnection and lagging occur.

For example, in a process in which a mobile phone 1 and a tablet computer, an audio, and a mobile phone 2 execute a super device service, the following problems may occur: The mobile phone 1 cannot find another terminal such as the tablet computer, the audio, or the mobile phone 2. The mobile phone 1 can search for the another terminal but cannot establish a connection to the another terminal. The mobile phone 1 is disconnected during communication with the another terminal.

For example, in a process in which a mobile phone and a computer execute a multi-screen collaboration service, the following problems may occur: The mobile phone cannot find the computer. The mobile phone can find the computer but cannot establish a connection to the computer. A connection between the mobile phone and the computer is unstable. A file cannot be dragged from the mobile phone to the computer. A file cannot be dragged from the computer to the mobile phone, and lagging occurs when the file is dragged.

For example, in a service in which a mobile phone projects a screen to a smart screen, the following problems may occur: The mobile phone cannot find the smart screen. The mobile phone can find the smart screen but cannot establish a connection to the smart screen. Lagging occurs in a projected image displayed on the smart screen.

For example, when a door lock and a smart screen execute a distributed peephole service, the following problems may occur: The door lock cannot call the smart screen. Lagging occurs when the smart screen displays an image shot by the door lock.

Terminals perform self-networking, including exchanging networking data, authentication data, or at least a part of distributed service data. The following describes the networking data, authentication data, and distributed service data.

The networking data may be for a networking connection between a terminal and another device (for example, another terminal). In some implementations, the networking data may include address information of the terminal, for example, an internet protocol (internet protocol, IP) address, a media access control (media access control, MAC) address, and a link address. In some implementations, the networking data may include a connection type supported by the terminal. In some implementations, the networking data may further include identity information of the terminal, for example, a terminal identifier of the terminal and a device type of the terminal.

The authentication data may be used to authenticate an identity of a terminal. In some implementations, the authentication data of the terminal may include a key corresponding to the terminal.

A distributed service is a service collaboratively processed by at least two terminals. The distributed service data is data required by a terminal and another terminal for collaboratively processing the distributed service. In some implementations, the distributed service data may be stored in a data distribution and management system (data distribution and management system, DDMS). In some implementations, the distributed service data may include one or more of a document management system (document management system, DMS), a database management system (database management system, DBMS), metadata of the DBMS, a device profile (device profile, DP), clipboard data, distributed hardware data, notification service data, a distributed file system (distributed file system, DFS), binder object information of a remote interface call service, security level data, configuration data, static data, service version information, and the like. The metadata of the DBMS may include a table structure of distributed data. DFS is configuration data of a distributed file. The distributed hardware data may be used to configure hardware such as a camera, a speaker, and a microphone of the another terminal.

Different distributed service data has different update frequencies. When an update frequency of distributed service data is higher, the distributed service data also needs to be more frequently synchronized and updated between terminals. In some implementations, for distributed service data with a lower update frequency, synchronization may be performed between terminals before a distributed service corresponding to the distributed service data is triggered. This synchronization manner may be referred to as pre-synchronization, and this part of distributed service data may be referred to as pre-synchronized data. In some implementations, for distributed service data with a higher update frequency, a terminal may synchronize the distributed service data with another terminal when a distributed service corresponding to the distributed service data is triggered. This synchronization manner may be referred to as on-demand synchronization.

For example, pre-synchronized data may include one or more of clipboard data, a device profile, metadata of a DBMS, distributed hardware data, notification service data, binder object information of a remote interface call service, security level data, at least a part of configuration data, at least a part of static data, service version information, and the like.

It should be noted that the foregoing is an example of the authentication data, the networking data, and the pre-synchronized data in a networking process of the terminal, and is not limited thereto. In actual application, the authentication data, the networking data, and the pre-synchronized data in the networking process of the terminal may include more or less data than the foregoing.

In some implementations, every two of a plurality of terminals establish a connection with each other to exchange networking data, and each time takes 5s (second) to 8s. When a quantity of terminals participating in self-networking is less than or equal to a maximum quantity of connections simultaneously established by a terminal, time required by the plurality of terminals to complete networking is short. However, when the quantity of terminals participating in self-networking is greater than the maximum quantity of connections simultaneously established by each terminal, each terminal can be simultaneously connected to only a part of terminals at most for networking. However, for another terminal other than the terminals, because a concurrent connection is not released, the another terminal cannot be immediately connected. As a result, duration of self-networking is excessively long.

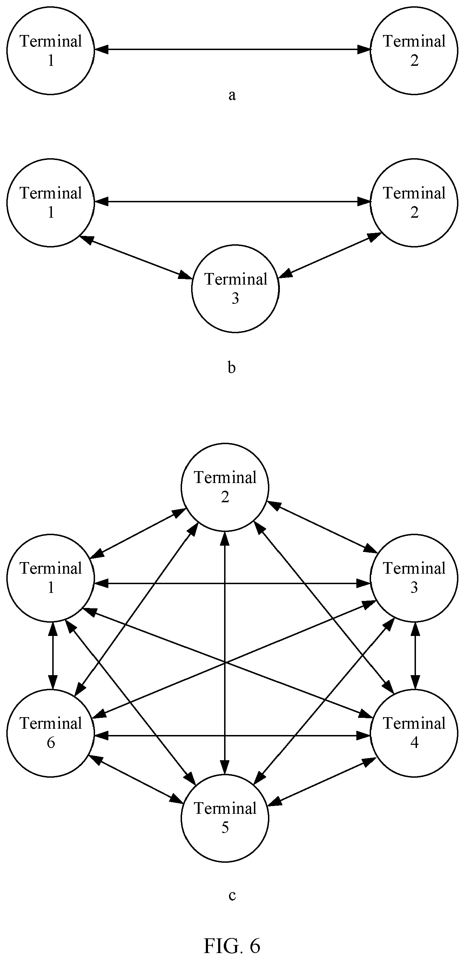

For example, a self-networking manner between a plurality of terminals is shown in FIG. 6. It is assumed that a maximum quantity of connections simultaneously established by each terminal is 4, and duration for establishing a connection between any two terminals and completing networking is 5s (second) to 8s. As shown in (a) in FIG. 6, two terminals participate in self-networking, and one connection needs to be established in a self-networking process. Duration is 5s to 8s. As shown in (b) in FIG. 6, three terminals participate in self-networking, and three connections need to be established in a self-networking process. However, because each terminal can simultaneously establish a maximum of four connections, duration is still 5s (seconds) to 8s. As shown in (c) in FIG. 6, six terminals participate in self-networking, that is, the quantity is greater than 4. Therefore, each terminal needs to first establish four connections to complete networking with four terminals, and then release the four connections and establish connections with other terminals; and 15 connections need to be established in a networking process. Duration is more than 5s to 8s.

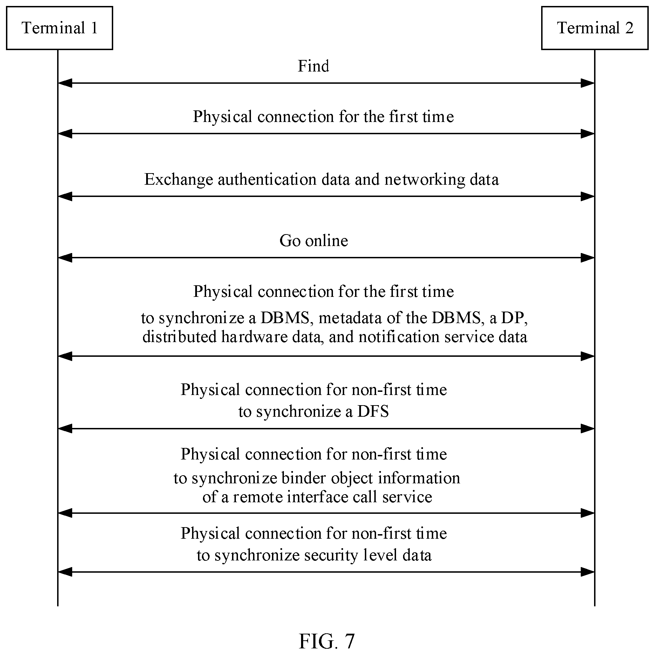

In some implementations, FIG. 7 shows a networking procedure between any two terminals.

A terminal 1 and a terminal 2 need to establish physical connections twice, including establishing a physical connection for the first time during self-networking, to exchange authentication data and networking data, and establishing a physical connection again after mutual reporting of device online after self-networking, to exchange distributed service data to implement data synchronization. The terminal 1 and the terminal 2 need to establish logical connections a plurality of times to perform data synchronization, and then can execute a distributed service based on the synchronized distributed service data, resulting in a low online rate of the distributed service.

Therefore, when a quantity of terminals participating in self-networking is small, for example, is three terminals, the foregoing self-networking process has little impact on self-networking efficiency. However, when the quantity of terminals participating in the self-networking is large, for example, greater than four, efficiency for the plurality of terminals to perform networking based on the foregoing self-networking process is severely reduced, including a low device online rate and a low distributed service online rate.

To resolve at least a part of the foregoing technical problem, this application provides a networking method. The method may be used by a plurality of terminals in a terminal set for networking.

In some implementations, the terminal set may include a plurality of terminals within a preset range. For example, the terminal set may include a plurality of terminals in a communication range of each other. In some implementations, the terminal set may include a plurality of terminals belonging to a same user identifier. For example, the terminal set includes a plurality of terminals that log in to a same account.

Specific embodiments are used below to describe in detail the technical solutions of this application. The following several specific embodiments may be combined with each other, and a same or similar concept or process may not be described repeatedly in some embodiments.

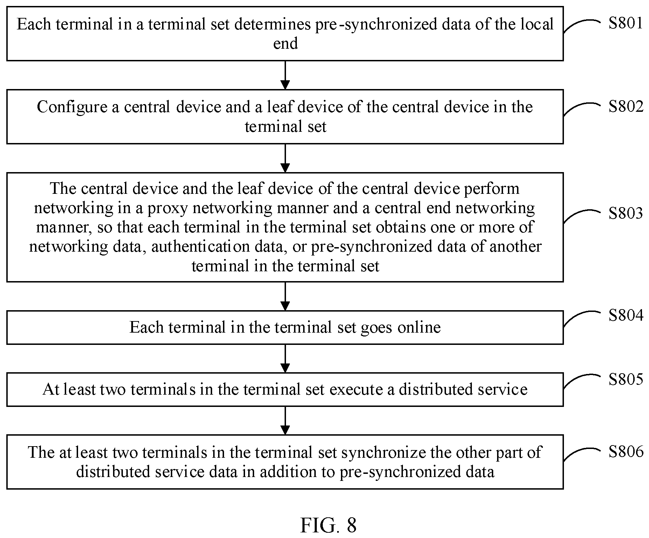

FIG. 8 is a schematic flowchart of a networking method according to an embodiment of this application. It should be noted that the method is not limited to a specific sequence shown in FIG. 8 and the following descriptions. It should be understood that in some embodiments, sequences of some steps of the method may be interchanged based on an actual requirement, or some steps may be omitted or deleted. The method includes the following steps.

S801: Each terminal in a terminal set determines pre-synchronized data of the local end.

To improve data synchronization efficiency and an online rate of a distributed service, each terminal in the terminal set may determine at least a part of distributed service data in the terminal as the pre-synchronized data, that is, aggregate the at least part of distributed service data.

In some implementations, the step S801 in which each terminal in the terminal set determines the pre-synchronized data of the local end may be omitted.

S802: Configure a central device and a leaf device of the central device in the terminal set.

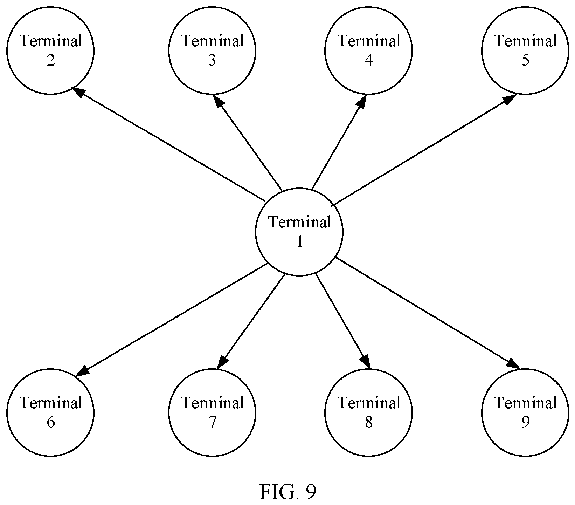

In some implementations, the terminal set includes one central device, and devices in the terminal set other than the central device are all leaf devices of the central device. In other words, each terminal in the terminal set serves only as a central device or a leaf device. For example, as shown in FIG. 9, a terminal set includes a terminal 1, a terminal 2, a terminal 3, a terminal 4, a terminal 5, a terminal 6, a terminal 7, a terminal 8, and a terminal 9. The terminal 1 is a central device, and the terminal 2, the terminal 3, the terminal 4, the terminal 5, the terminal 6, the terminal 7, the terminal 8, and the terminal 9 are leaf devices of the terminal 1.

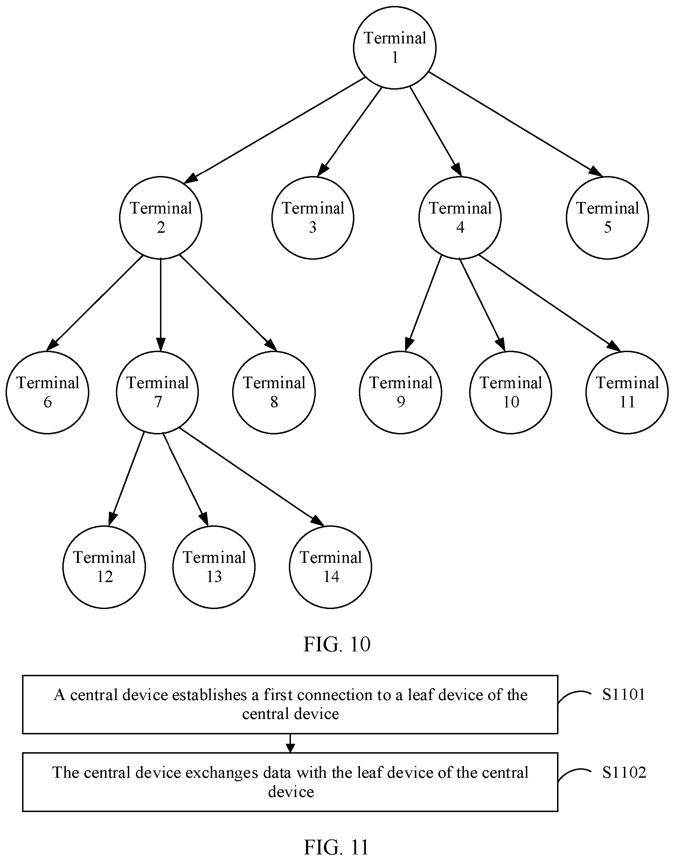

In some implementations, the terminal set includes a plurality of central devices, and each central device corresponds to a plurality of leaf devices. Each terminal in the terminal set may serve as a leaf device of another central device while serving as a central device. For example, as shown in FIG. 10, a terminal set includes a terminal 1, a terminal 2, a terminal 3, a terminal 4, a terminal 5, a terminal 6, a terminal 7, a terminal 8, a terminal 9, a terminal 10, a terminal 11, a terminal 12, a terminal 13, and a terminal 14. The terminal 1 is a central device, and the terminal 2, the terminal 3, the terminal 4, and the terminal 5 serve as leaf devices of the terminal 1. In addition, the terminal 2 is also a central device, and the terminal 6, the terminal 7, and the terminal 8 are leaf devices of the terminal 2. The terminal 4 is also a central device, and the terminal 9, the terminal 10, and the terminal 11 are leaf devices of the terminal 4. The terminal 7 is also a central device, and the terminal 12, the terminal 13, and the terminal 14 are leaf devices of the terminal 7.

S803: The central device and the leaf device of the central device perform networking in a proxy networking manner and a central end networking manner, so that each terminal in the terminal set obtains one or more of networking data, authentication data, or pre-synchronized data of another terminal in the terminal set.

Proxy networking means that a first terminal in a terminal set may be a proxy of a third terminal to send one or more of networking data, authentication data, and pre-synchronized data of the third terminal to a second terminal, so that the second terminal can obtain the one or more of the networking data, authentication data, and pre-synchronized data of the third terminal without establishing a connection to the third terminal. The first terminal, second terminal, and third terminal are any three terminals in the terminal set.

Central end networking means that a central device actively initiates networking to a leaf device, to exchange networking data, authentication data, and pre-synchronized data with the leaf device.

That the central device and the leaf device of the central device perform networking in the proxy networking manner and the central end networking manner is specifically as follows: When the central device and the leaf device are configured in the terminal set, the central device may actively initiate networking to the leaf device of the central device, to exchange networking data, authentication data, and pre-synchronized data with the leaf device of the central device; and during the exchange, the central device and the leaf device of the central device may send networking data, authentication data, and pre-synchronized data of a part or all of terminals in the terminal set to a peer end, so that each terminal in the terminal set can perform networking with each of the other terminals in the terminal set without establishing a connection to each of the other terminals in the terminal set.

In some implementations, S803 may be replaced with that the central device and the leaf device of the central device perform networking in a proxy networking manner and a central end networking manner, so that each terminal in the terminal set obtains networking data of another terminal in the terminal set. In other words, at least one of authentication data and pre-synchronized data may be omitted. For example, if the step S801 in which each terminal in the terminal set determines the pre-synchronized data of the local end is omitted, the pre-synchronized data in S803 may be omitted.

S804: Each terminal in the terminal set goes online.

After any two terminals in the terminal set obtain networking data of the peer end, the any two terminals may communicate with each other based on the networking data of the peer end. Therefore, in some implementations, after obtaining the networking data of the peer end, the any two terminals in the terminal set may notify the peer end that the local end goes online.

After the any two terminals in the terminal set obtain authentication data of the peer end, the any two terminals may perform identity authentication on the peer end, and the any two terminals may perform encrypted communication. Therefore, in some implementations, after obtaining the networking data and the authentication data of the peer end, the any two terminals in the terminal set may notify the peer end that the local end goes online.

After the any two terminals in the terminal set obtain pre-synchronized data of the peer end, the any two terminals may immediately execute the distributed service based on the pre-synchronized data after going online, without synchronizing the pre-synchronized data again. This improves networking efficiency and the online rate of the distributed service. Therefore, in some implementations, after obtaining the networking data and the pre-synchronized data of the peer end, the any two terminals in the terminal set may notify the peer end that the local end goes online.

In some implementations, the step S804 in which each terminal in the terminal set goes online may be included in the step S803 in which the central device and the leaf device of the central device perform networking in the proxy networking manner and the central end networking manner.

In some implementations, the step S804 in which each terminal in the terminal set goes online may be omitted.

S805: At least two terminals in the terminal set execute the distributed service.

In some implementations, if the at least two terminals that execute the distributed service have synchronized pre-synchronized data before going online, the at least two terminals may execute the distributed service based on the pre-synchronized data. Alternatively, in some other implementations, if the at least two terminals that execute the distributed service have not synchronized pre-synchronized data before going online, the at least two terminals may first synchronize the pre-synchronized data, and then execute the distributed service based on the pre-synchronized data.

In some implementations, the distributed service may include a screen projection service, a super device service, a multi-screen collaboration service, or a distributed peephole service. Certainly, in actual application, the distributed service may alternatively include another type of distributed service.

In some implementations, when the distributed service is in a foreground, a link resource may be preferentially allocated to the distributed service, to further improve the online rate and processing efficiency of the distributed service.

In some implementations, the step S805 in which the at least two terminals in the terminal set execute the distributed service may be omitted.

S806: The at least two terminals in the terminal set synchronize the other part of distributed service data in addition to the pre-synchronized data.

It may be learned from the foregoing descriptions that the at least two terminals in the terminal set have synchronized the pre-synchronized data before going online, where the pre-synchronized data includes at least a part of distributed service data; and the at least two terminals need to synchronize the other remaining part of distributed service data when the at least two terminals execute the distributed service after going online. Therefore, after the at least two terminals go online, the at least two terminals may also be triggered by the executed distributed service to synchronize at least the part of distributed service data in addition to the pre-synchronized data.

In some implementations, when the step S802 in which the pre-synchronized data is synchronized is not omitted, the step S806 in which the at least two terminals in the terminal set synchronize the other part of distributed service data in addition to the pre-synchronized data may be omitted. In other words, after the at least two terminals establish a connection once and synchronize the pre-synchronized data once in S802, the at least two terminals no longer synchronize any distributed data, to further save a link resource, so that the link resource can be allocated to the distributed service in the foreground in a timely manner. This improves the online rate and processing efficiency of distributed service in the foreground.

In this embodiment of this application, the central device (which may also be referred to as a primary device) may be determined from a plurality of terminals participating in self-networking, and then a connection is established between the central device and another device terminal, to reduce a quantity of times of establishing a connection between terminals in a self-networking process, and improve networking efficiency. In some implementations, a terminal may be a proxy of another terminal to exchange data with still another terminal, to reduce a quantity of times of establishing a connection in a self-networking process, and improve networking efficiency. In some implementations, before going online, a terminal establishes a connection to another terminal once and synchronizes pre-synchronized data once. After going online, the terminal no longer synchronizes this part of data. This reduces repeatedly establishing a connection between terminals, and improves efficiency for networking by every two of the terminals. In some implementations, a terminal may freeze a link resource occupied by a distributed service in a background, and allocate the link resource to the distributed service in the foreground, to preferentially ensure a connection establishment request of a foreground service, improve connection establishment efficiency during foreground service processing, ensure a foreground connection success rate and the device online rate, and improve user experience on the foreground service. In some implementations, when detecting a connection event between a terminal and a server, the terminal may upload authentication data, networking data, or pre-synchronized data of the terminal to the server, and/or obtain authentication data, networking data, or pre-synchronized data of another terminal from the server, to improve networking efficiency. In other words, the terminal exchanges the authentication data, networking data, or pre-synchronized data with the another terminal without establishing a connection, to reduce a quantity of times of establishing a connection between terminals in a self-networking process.

FIG. 11 is a schematic flowchart of a networking method according to an embodiment of this application. The method may be used as a detailed description of S803. A terminal set includes a central device and a leaf device. In some implementations, the central device may serve as a first terminal, and the leaf device may serve as a second terminal. In some implementations, the method may be used by the terminal set to perform networking when the terminal set is not connected to a server. It should be noted that the method is not limited to a specific sequence shown in FIG. 11 and the following descriptions. It should be understood that in some embodiments, sequences of some steps of the method may be interchanged based on an actual requirement, or some steps may be omitted or deleted. The method includes the following steps.

S1101: The central device establishes a first connection to the leaf device of the central device.

In some manners, the central device may send a connection establishment request to the leaf device of the central device, to request to establish the first connection to the leaf device.

In some implementations, the central device may establish first connections to a part or all leaf devices of the central device. In some implementations, if a quantity of connections that have been currently established by the central device is greater than or equal to a maximum quantity of connections simultaneously established by the central device, the central device may establish the first connection to the leaf device after at least a part of connection that has been currently established is released.

In some implementations, a speed of a connection (including the first connection) between any two terminals in the terminal set may be greater than a transmission speed of a connection established to reduce energy consumption, for example, a Bluetooth low energy (Bluetooth low energy, BLE) connection. Such a connection with a high transmission speed may also be referred to as a high-speed connection. This can reduce a delay of a single time of a connection established between terminals, and improve networking efficiency. For example, the high-speed link may include an HML.

S1102: The central device exchanges data with the leaf device of the central device.

In some implementations, that the central device exchanges the data with the leaf device of the central device includes that the central device sends a first data set to the leaf device of the central device, and receives a second data set sent by the leaf device. In some implementations, the first data set or the second data set includes networking data of at least two terminals in the terminal set. When exchanging the data with the leaf device, the central device may exchange networking data of a plurality of terminals through one time of connection establishment, instead of exchanging only networking data of the central device and networking data of the leaf device. That is, the central device and the leaf device may be proxies of other terminals in the terminal set to exchange networking data. The central device and the leaf device can also obtain the networking data of the other terminals without establishing connections to the other terminals. This reduces a quantity times for establishing connections in the terminal set in a networking process, and improves networking efficiency.

In some implementations, the first data set and the second data set are at least partially different.

In some implementations, the first data set includes the networking data of the central device. In some implementations, the second data set sent by the leaf device includes the networking data of the leaf device.

In some implementations, the first data set may include networking data of all terminals in the terminal set currently stored by the central device. In some implementations, the second data set includes networking data of all terminals in the terminal set currently stored by the leaf device.

In some implementations, if the central device obtains networking data of each terminal in the terminal set, the first data set may include the networking data of each terminal in the terminal set, so that each terminal in the terminal set obtains the networking data of each terminal in the terminal set without establishing a connection to each terminal in the terminal set. This reduces a quantity times for establishing connections, and improves networking efficiency.

In some implementations, the first data set or the second data set includes authentication data of at least two terminals in the terminal set. Similarly, when exchanging the data with the leaf device, the central device may exchange authentication data of a plurality of terminals through one time of connection establishment, instead of exchanging only authentication data of the central device and authentication data of the leaf device. That is, the central device and the leaf device may be proxies of other terminals in the terminal set to exchange authentication data. The central device and the leaf device can also obtain the authentication data of the other terminals without establishing connections to the other terminals. This reduces a quantity times for establishing connections in the terminal set in a networking process, and improves networking efficiency.

In some implementations, the first data set includes the authentication data of the central device. In some implementations, the second data set sent by the leaf device includes the authentication data of the leaf device.

In some implementations, the first data set may include authentication data of all terminals in the terminal set currently stored by the central device. In some implementations, the second data set includes authentication data of all terminals in the terminal set currently stored by the leaf device.

In some implementations, if the central device obtains authentication data of each terminal in the terminal set, the first data set includes the authentication data of each terminal in the terminal set, so that each terminal in the terminal set obtains the authentication data of each terminal in the terminal set without establishing a connection to each terminal in the terminal set. This reduces a quantity times for establishing connections, and improves networking efficiency.

In some implementations, the first data set or the second data set includes pre-synchronized data of the at least two terminals in the terminal set. Similarly, when exchanging the data with the leaf device, the central device may exchange pre-synchronized data of a plurality of terminals through one time of connection establishment, instead of exchanging only pre-synchronized data of the central device and pre-synchronized data of the leaf device. That is, the central device and the leaf device may be proxies of other terminals in the terminal set to exchange pre-synchronized data. The central device and the leaf device can also obtain the pre-synchronized data of the other terminals without establishing connections to the other terminals. This reduces a quantity times for establishing connections in the terminal set in a networking process, and improves networking efficiency. In some implementations, an operation of exchanging the pre-synchronized data between the central device and the leaf device may also be referred to as data synchronization.

In some implementations, the first data set includes the pre-synchronized data of the central device. In some implementations, the second data set sent by the leaf device includes the pre-synchronized data of the leaf device.

In some implementations, the first data set may include pre-synchronized data of all terminals in the terminal set currently stored by the central device. In some implementations, the second data set includes pre-synchronized data of all terminals in the terminal set currently stored by the leaf device.

In some implementations, if the central device obtains pre-synchronized data of each terminal in the terminal set, the first data set includes the pre-synchronized data of each terminal in the terminal set, so that each terminal in the terminal set obtains the pre-synchronized data of each terminal in the terminal set without establishing a connection to each terminal in the terminal set. This reduces a quantity times for establishing connections, and improves networking efficiency.

In this embodiment of this application, the central device can establish the first connection to the leaf device of the central device, and exchange the data with the leaf device based on the first connection. The central device can send the networking data, the authentication data, or the pre-synchronized data of the other terminals in the terminal set to the leaf device, and the leaf device can also send the networking data, authentication data, or pre-synchronized data of other terminals in the terminal set to the central device. Therefore, each terminal in the terminal set exchanges data with all the other terminals without establishing connections to all the other terminals in the terminal set. This significantly reduces a quantity times for establishing connections between terminals in the terminal set in the networking process, and improves networking efficiency.

For example, a terminal set shown in FIG. 9 includes a terminal 1, a terminal 2, a terminal 3, a terminal 4, a terminal 5, a terminal 6, a terminal 7, a terminal 8, and a terminal 9. The terminal 1 is a central device, and the terminal 2, the terminal 3, the terminal 4, the terminal 5, the terminal 6, the terminal 7, the terminal 8, and the terminal 9 are leaf devices of the central device. Each terminal serves only as a central device or a leaf device. A maximum quantity of connections simultaneously established by each terminal is 4, and a quantity of leaf devices of the terminal 1 is greater than 4. Therefore, the terminal 1 may first exchange data with a part of terminals in the terminal set.

It is assumed that each terminal currently stores only networking data, authentication data, and pre-synchronized data of the terminal.

The terminal 1 may first establish a first connection to each of the terminal 2, the terminal 3, the terminal 4, and the terminal 5, and exchange data with the terminal 2, the terminal 3, the terminal 4, and the terminal 5. In some implementations, the terminal 1 separately sends a first data set to the terminal 2, the terminal 3, the terminal 4, and the terminal 5, where the first data set includes networking data, authentication data, and pre-synchronized data of the sending terminal 1. In some implementations, the terminal 1 may receive a second data set sent by each of the terminal 2, the terminal 3, the terminal 4, and the terminal 5, where the second data set sent by each terminal includes authentication data and pre-synchronized data of the terminal. In this case, the terminal 1 stores the networking data, authentication data, and pre-synchronized data of each of the terminal 1, the terminal 2, the terminal 3, the terminal 4, and the terminal 5.

Then, the terminal releases the first connection to each of the terminal 2, the terminal 3, the terminal 4, and the terminal 5, establishes a first connection to each of the terminal 6, the terminal 7, the terminal 8, and the terminal 9, and exchanges data with the terminal 6, the terminal 7, the terminal 8, and the terminal 9. In some implementations, the terminal 1 separately sends a first data set to the terminal 6, the terminal 7, the terminal 8, and the terminal 9, where the first data set includes the networking data, authentication data, and pre-synchronized data of each of the terminal 1, the terminal 2, the terminal 3, the terminal 4, and the terminal 5. In some implementations, the terminal 1 receives a second data set sent by each of the terminal 6, the terminal 7, the terminal 8, and the terminal 9, where the second data set sent by each terminal includes networking data, authentication data, and pre-synchronized data of the terminal. In this case, the terminal 1 stores networking data, the authentication data, and the pre-synchronized data of each terminal in the terminal set.

The terminal 1 separately exchanges data with the terminal 2, the terminal 3, the terminal 4, the terminal 5, the terminal 6, the terminal 7, the terminal 8, and the terminal 9 again, including sending a first data set to each of the terminal 2, the terminal 3, the terminal 4, the terminal 5, the terminal 6, the terminal 7, the terminal 8, and the terminal 9, where the first data set includes the networking data, authentication data, and pre-synchronized data of each terminal in the terminal set. In this case, each terminal in the terminal set stores networking data, authentication data, and pre-synchronized data of another terminal in the terminal set.

It can be seen that in the terminal set shown in FIG. 9, the terminal 1, through the connection established only to each of the terminal 2, the terminal 3, the terminal 4, the terminal 5, the terminal 6, the terminal 7, the terminal 8, and the terminal 9, and each of the terminal 2, the terminal 3, the terminal 4, the terminal 5, the terminal 6, the terminal 7, the terminal 8, and the terminal 9, through the connection established only to the terminal 1, can obtain the networking data of each of the terminal 1, the terminal 2, the terminal 3, the terminal 4, the terminal 5, the terminal 6, the terminal 7, the terminal 8, and the terminal 9. That is, the terminal 1 is a proxy of another terminal for networking, so that the nine terminals in the terminal set can complete networking data exchange by establishing only 16 connections. However, for comparison, if every two of the nine terminals are connected to each other to exchange networking data, 36 connections need to be established to complete networking data exchange. Therefore, a networking manner of the terminal set shown in FIG. 9 significantly reduces a quantity of times of establishing connections.

For example, in a terminal set shown in FIG. 10, the terminal set includes a terminal 1, a terminal 2, a terminal 3, a terminal 4, a terminal 5, a terminal 6, a terminal 7, a terminal 8, a terminal 9, a terminal 10, a terminal 11, a terminal 12, a terminal 13, and a terminal 14. The terminal 1 is a central device, and the terminal 2, the terminal 3, the terminal 4, and the terminal 5 serve as leaf devices of the terminal 1. In addition, the terminal 2 is also a central device, and the terminal 6, the terminal 7, and the terminal 8 are leaf devices of the terminal 2. The terminal 4 is also a central device, and the terminal 9, the terminal 10, and the terminal 11 are leaf devices of the terminal 4. The terminal 7 is also a central device, and the terminal 12, the terminal 13, and the terminal 14 are leaf devices of the terminal 7. It can be learned from comparison with FIG. 9 that at least a part of terminals in FIG. 10 may serve as both a central device and a leaf device. It is assumed that a quantity of connections simultaneously established by each terminal is less than or equal to 4. When a quantity of terminals included in a terminal set is large, for example, more than 10, a networking manner shown in FIG. 10 can be used to reduce time for waiting for a connection to be released, and further improve networking efficiency.

It is assumed that each terminal currently stores only networking data of the terminal.

A manner in which each central device exchanges data with a leaf device of the central device in FIG. 10 may be similar to or the same as a manner in which the central device exchanges data with the leaf device in FIG. 9.

After the terminal 7 exchanges data with the terminal 12, the terminal 13, and the terminal 14, the terminal 7 may store networking data, authentication data, and pre-synchronized data of the terminal 7, the terminal 12, the terminal 13, and the terminal 14. After the terminal 2 exchanges data with the terminal 6, the terminal 7, and the terminal 8, the terminal 2 may store networking data, authentication data, and pre-synchronized data of the terminal 2, the terminal 6, the terminal 7, the terminal 12, the terminal 13, the terminal 14, and the terminal 8. After the terminal 4 exchanges data with the terminal 9, the terminal 10, and the terminal 11, the terminal 4 may store networking data, authentication data, and pre-synchronized data of the terminal 4, the terminal 9, the terminal 10, and the terminal 11. After the terminal 1 exchanges data with the terminal 2, the terminal 3, and the terminal 4, the terminal 1 may obtain networking data of each terminal in the terminal set.

The terminal 1 continues to exchange data with the terminal 2, the terminal 3, the terminal 4, and the terminal 5, so that the terminal 2, the terminal 3, the terminal 4, and the terminal 5 obtain networking data, authentication data, and pre-synchronized data of each terminal in the terminal set. The terminal 2 continues to exchange data with the terminal 6, the terminal 7, and the terminal 8, so that the terminal 6, the terminal 7, and the terminal 8 obtain the networking data, authentication data, and pre-synchronized data of each terminal in the terminal set. The terminal 7 continues to exchange data with the terminal 12, the terminal 13, and the terminal 14, so that the terminal 12, the terminal 13, and the terminal 14 obtain the networking data, authentication data, and pre-synchronized data of each terminal in the terminal set. The terminal 4 continues to exchange data with the terminal 9, the terminal 10, and the terminal 11, so that the terminal 9, the terminal 10, and the terminal 11 obtain the networking data, authentication data, and pre-synchronized data of each terminal in the terminal set. In this case, each terminal in the terminal set stores networking data, authentication data, and pre-synchronized data of another terminal in the terminal set.

It can be seen that in the terminal set shown in FIG. 10, if a quantity of terminals included in the terminal set is N, and each time of connection establishment between the terminals takes t seconds, when the terminal set performs networking in the manner shown in FIG. 10, total required duration is T1=t×(floor(log3(N/4))+1). When the terminal set is separately connected to another terminal via a terminal to exchange networking data for networking, total required duration is T2=t×N(N-1)/2. For example, in a local area network household scenario, assuming that N is 20 and t is 1 second, T1 is 2 seconds, and T2 is 190 seconds. In a non-local area network household scenario, assuming that N is 20 and t is 3 seconds, T1 is 6 seconds, and T2 is 570 seconds. In a local area network industrial scenario, assuming that N is 200 and t is 1 second, T1 is 4 seconds, and T2 is 5.8 hours. In a non-local area network industrial scenario, assuming that N is 200 and t is 3 seconds, T1 is 12 seconds, and T2 is 16.58 hours. In another local area network industrial scenario, assuming that N is 2000 and t is 1 second, T1 is 5 seconds, and T2 is 555 hours. In another non-local area network industrial scenario, assuming that N is 2000 and t is 3 seconds, T1 is 15 seconds, and T2 is 1665 hours.

In the foregoing example, when exchanging data with another terminal, each terminal in the terminal set can send, to the another terminal, networking data, authentication data, and pre-synchronized data of all the terminals in the terminal set currently (for example, before the terminal establishes a connection to the another terminal) stored by the terminal, that is, an amount of stored data is equal to an amount of sent data. However, in some other implementations, the terminal may alternatively send, to the another terminal, currently stored networking data, authentication data, and pre-synchronized data of a part of terminals in the terminal set, that is, the amount of stored data is greater than an amount of sent data. Alternatively, in some other implementations, the terminal currently stores networking data, authentication data, and pre-synchronized data, and may send one or more of the stored networking data, authentication data, and pre-synchronized data to the another terminal, for example, may send only the networking data to the another terminal.

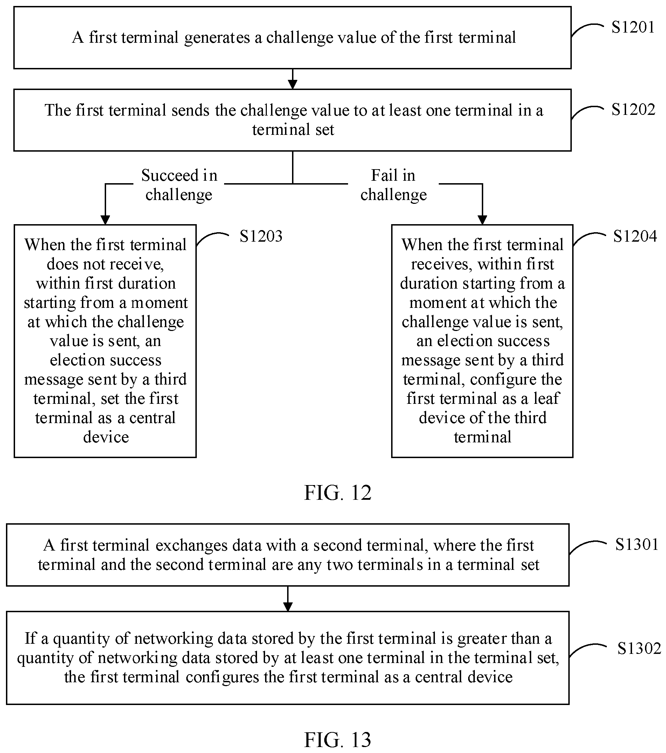

FIG. 12 is a schematic flowchart of a central device configuration method according to an embodiment of this application. The method may be used as a detailed description of S802, and is used to configure a central device in a terminal set. It should be noted that the method is not limited to a specific sequence shown in FIG. 12 and the following descriptions. It should be understood that in some embodiments, sequences of some steps of the method may be interchanged based on an actual requirement, or some steps may be omitted or deleted. The method includes the following steps.

S1201: A first terminal generates a challenge value of the first terminal.

In some implementations, the first terminal may be any terminal in the terminal set.

In some implementations, the first terminal may generate the challenge value of the first terminal when an election success message of a central device is not received within second duration starting from a moment at which an election success message (for example, a victory message) of a central device is previously received, that is, when the central device is out of contact with the first terminal, election of the new central device is triggered. Alternatively, in some other implementations, the first terminal may generate the challenge value of the first terminal when joining the terminal set. Certainly, in actual application, the first terminal may alternatively generate the challenge value of the first terminal at another occasion to trigger election of the central device. An occasion and a manner of triggering election of the central device are not limited in embodiments of this application.

In some implementations, the first terminal may generate the challenge value according to a preset challenge value generation rule. For example, the challenge value may include a terminal identifier or a random number of the first terminal.

In some other implementations, the challenge value may be positively correlated with a quantity of networking data, a quantity of authentication data, and/or a quantity of pre-synchronized data stored in the first terminal. In other words, when the quantity of networking data, the quantity of authentication data, and/or the quantity of pre-synchronized data stored in the first terminal are/is greater, the first terminal is more likely to become the central device, so that the elected central device can obtain networking data, authentication data, and pre-synchronized data of each terminal in the terminal set more quickly. This further improves networking efficiency.

Alternatively, in some other implementations, the first terminal may generate the challenge value in another manner.

S1202: The first terminal sends the challenge value to at least one terminal in the terminal set.

In some implementations, the first terminal may send the challenge value in a broadcast form, and a terminal within a broadcast range of the first terminal may receive the challenge value. Alternatively, in some other implementations, the first terminal may send the challenge value to the at least one terminal in the terminal set in another manner.

A third terminal may be a terminal, that receives the challenge value of the first terminal, in the terminal set. The third terminal may generate a challenge value of the third terminal. If the challenge value of the third terminal is less than or equal to the challenge value of the first terminal, the third terminal becomes a leaf device. If the challenge value of the third terminal is greater than the challenge value of the first terminal, the third terminal may send the challenge value of the third terminal to at least one terminal in the terminal set, to initiate a new round of election.

S1203: When the first terminal does not receive, within first duration starting from a moment at which the challenge value is sent, an election success message sent by the third terminal, set the first terminal as the central device.

It may be learned from the foregoing descriptions that the third terminal that receives the challenge value of the first terminal becomes the leaf device when the challenge value of the third terminal is less than or equal to the challenge value of the first terminal. Therefore, if the first terminal does not receive, within the first duration starting from the moment at which the challenge value is sent, the election success message sent by the third terminal, challenge values of other terminals are less than or equal to the challenge value of the first terminal. Therefore, the first terminal succeeds in challenge, and the first terminal may configure the first terminal as the central device. In some implementations, if becoming the central device, the first terminal may send an election success message to at least one terminal in the terminal set, to declare the first terminal as the central device to the at least one terminal.

In some implementations, the first duration may be preset duration.

S1204: When the first terminal receives, within first duration starting from a moment at which the challenge value is sent, an election success message sent by the third terminal, configure the first terminal as a leaf device of the third terminal.

It may be learned from the foregoing descriptions that the third terminal that receives the challenge value of the first terminal becomes the leaf device when the challenge value of the third terminal is less than or equal to the challenge value of the first terminal or initiates the new round of election when the challenge value of the third terminal is greater than the challenge value of the first terminal. Therefore, after a first round of election, a terminal, whose challenge value is less than or equal to the challenge value of the first terminal, in the terminal set does not participate in a subsequent election process, and a terminal, whose challenge value is greater than the challenge value of the first terminal, in the terminal set participates in the new round of election, until a terminal with a largest challenge value becomes the central device. Therefore, if the first terminal receives, within the first duration starting from the moment at which the challenge value is sent, the election success message sent by the third terminal, the first terminal fails in challenge, and the first terminal sets the first terminal as the leaf device of the third terminal.

In this embodiment of this application, the central device can be elected in the terminal set, and then the central device initiates a connection establishment request to the leaf device of the central device and performs data exchange. This reduces a quantity of connections between terminals in the terminal set from N×(N-1) to N-1.

For example, in a terminal set shown in FIG. 9, a terminal 1 broadcasts a challenge value of the terminal 1, to trigger a first round of election. Each of a terminal 2, a terminal 3, a terminal 4, a terminal 5, a terminal 6, a terminal 7, a terminal 8, and a terminal 9 receives the challenge value of the terminal 1, and generates a challenge value corresponding to the terminal.

In the first round of election, if the challenge value generated by each of the terminal 2, the terminal 3, the terminal 4, the terminal 5, the terminal 6, the terminal 7, the terminal 8, and the terminal 9 is less than or equal to the challenge value of the terminal 1, each of the terminal 2, the terminal 3, the terminal 4, the terminal 5, the terminal 6, the terminal 7, the terminal 8, and the terminal 9 configures the terminal as a leaf device. After sending the challenge value of the terminal 1, the terminal 1 does not receive a challenge value sent by another terminal. Therefore, the terminal 1 succeeds in challenge and configures the terminal 1 as a central device. If the challenge value generated by each of the terminal 2, the terminal 3, the terminal 4, the terminal 5, the terminal 6, and the terminal 7 is less than or equal to the challenge value of the terminal 1, and the challenge value generated by each of the terminal 8 and the terminal 9 is greater than the challenge value of the terminal 1, each of the terminal 1, the terminal 2, the terminal 3, the terminal 4, the terminal 5, the terminal 6, and the terminal 7 configures the terminal as a leaf device, and the terminal 8 broadcasts the challenge value of the terminal 8, to trigger a second round of election.

In the second round of election, the terminal 9 compares the challenge value of the terminal 9 with the challenge value of the terminal 8. If the challenge value of the terminal 9 is less than or equal to the challenge value of the terminal 8, the terminal 8 configures the terminal 8 as the central device, and broadcasts an election message, to notify another terminal in the terminal set that the terminal 8 is the central device. If the challenge value of the terminal 9 is greater than the challenge value of the terminal 8, the terminal 8 configures the terminal 8 as a leaf device, and the terminal 9 broadcasts the challenge value of the terminal 9, to trigger a third round of election.

In the third round of election, because other terminals in the terminal set all become leaf devices and do not participate in election, the terminal 9 configures the terminal 9 as the central device.

FIG. 13 is a schematic flowchart of another central device configuration method according to an embodiment of this application. The method may be used as a detailed description of S802, and is used to configure a central device in a terminal set based on a data amount stored in a terminal. It should be noted that the method is not limited to a specific sequence shown in FIG. 13 and the following descriptions. It should be understood that in some embodiments, sequences of some steps of the method may be interchanged based on an actual requirement, or some steps may be omitted or deleted. The method includes the following steps.

S1301: A first terminal exchanges data with a second terminal, where the first terminal and the second terminal are any two terminals in the terminal set.

In some implementations, the first terminal may establish a first connection to the second terminal, and through the first connection, send a first data set to the second terminal, and receive a second data set sent by the second terminal.

In some implementations, the first data set or the second data set includes networking data of at least two terminals in the terminal set.

In some implementations, the first data set includes networking data of the first terminal. In some implementations, the second data set includes networking data of the second terminal.

In some implementations, the first data set may include networking data of all terminals in the terminal set currently stored by the first terminal. In some implementations, the second data set includes networking data of all terminals in the terminal set currently stored by the second terminal.

In some implementations, the first data set or the second data set includes authentication data of at least two terminals in the terminal set.

In some implementations, the first data set includes authentication data of the first terminal. In some implementations, the second data set includes authentication data of the second terminal.

In some implementations, the first data set may include authentication data of all terminals currently stored by the first terminal. In some implementations, the second data set includes authentication data of all terminals currently stored by the second terminal.

In some implementations, the first data set or the second data set includes pre-synchronized data of the at least two terminals in the terminal set.

In some implementations, the first data set includes pre-synchronized data of the first terminal. In some implementations, the second data set includes pre-synchronized data of the second terminal.

In some implementations, the first data set may include pre-synchronized data of all terminals in the terminal set currently stored by the first terminal. In some implementations, the second data set includes pre-synchronized data of all terminals in the terminal set currently stored by the second terminal.

In some implementations, the first terminal may send a connection establishment request to the second terminal through broadcast. When receiving the request, the second terminal determines whether data exchange is performed with the first terminal. If data exchange is performed with the first terminal, the second terminal does not continue to establish the first connection to the first terminal. If data exchange is not performed with the first terminal, the second terminal establishes the first connection to the first terminal, and performs data exchange or data synchronization with the first terminal.

In some implementations, the first terminal may encrypt a terminal identifier (for example, a media access control address) of the first terminal based on credential information of the first terminal, and broadcast the encrypted terminal identifier to the second terminal. When receiving the broadcast, the second terminal may decrypt the broadcast based on the credential information of the first terminal, to obtain the terminal identifier of the first terminal. The second terminal determines, based on the terminal identifier of the first terminal, whether the networking data of the first terminal is stored. If the second terminal stores the networking data of the first terminal, the second terminal does not continue to establish the first connection to the first terminal. Otherwise, the second terminal continues to establish the first connection to the first terminal.

S1302: If a quantity of networking data stored by the first terminal is greater than a quantity of networking data stored by at least one terminal in the terminal set, the first terminal configures the first terminal as the central device.

When the quantity of networking data stored by the first terminal is greater than the quantity of networking data stored by the at least one terminal in the terminal set, the first terminal is configured as the central device, so that the first terminal can obtain, by performing fewer operations, networking data of each terminal in the terminal set more quickly, and the first terminal can send the networking data of each terminal in the terminal set to each terminal in the terminal set more quickly. This further improves networking efficiency.

In some implementations, the quantity of networking data stored by the first terminal may be greater than a quantity of networking data stored by any leaf device (for example, the second terminal) of the first terminal.

In this implementation of this application, every two of a plurality of terminals in the terminal set may first establish a connection with each other for networking and exchange data. Then a terminal that stores a large amount of networking data is configured as the central device, and another terminal in the plurality of terminals is configured as the leaf device of the central device, so that the central device can obtain the networking data of each terminal in the terminal set more quickly, and then the central device sends the networking data to the leaf device. This further improves networking efficiency.

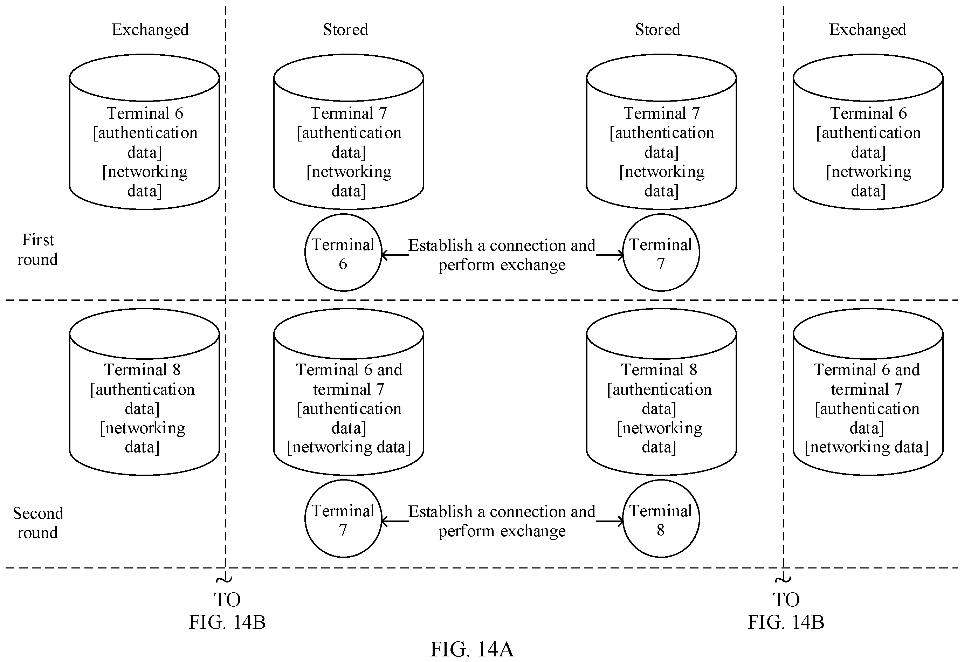

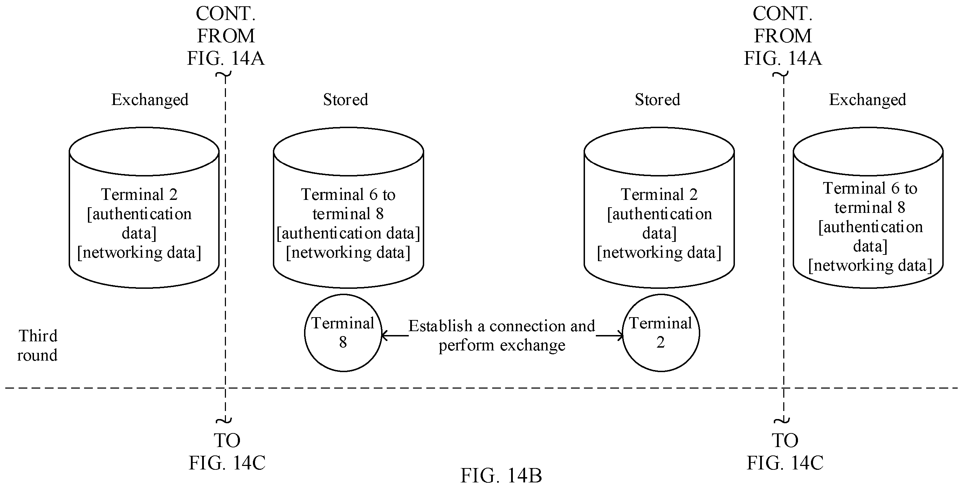

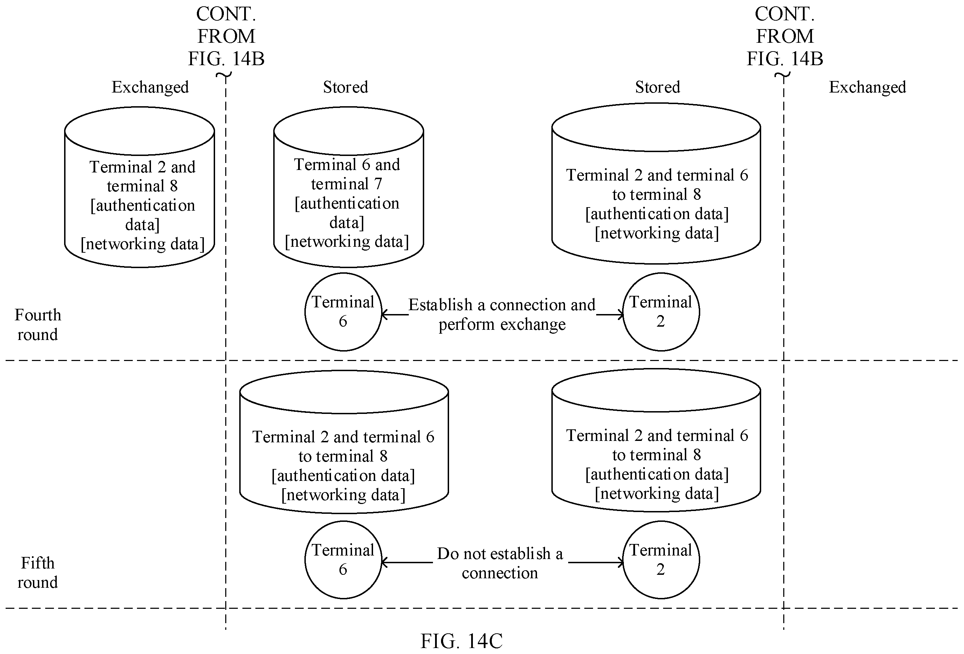

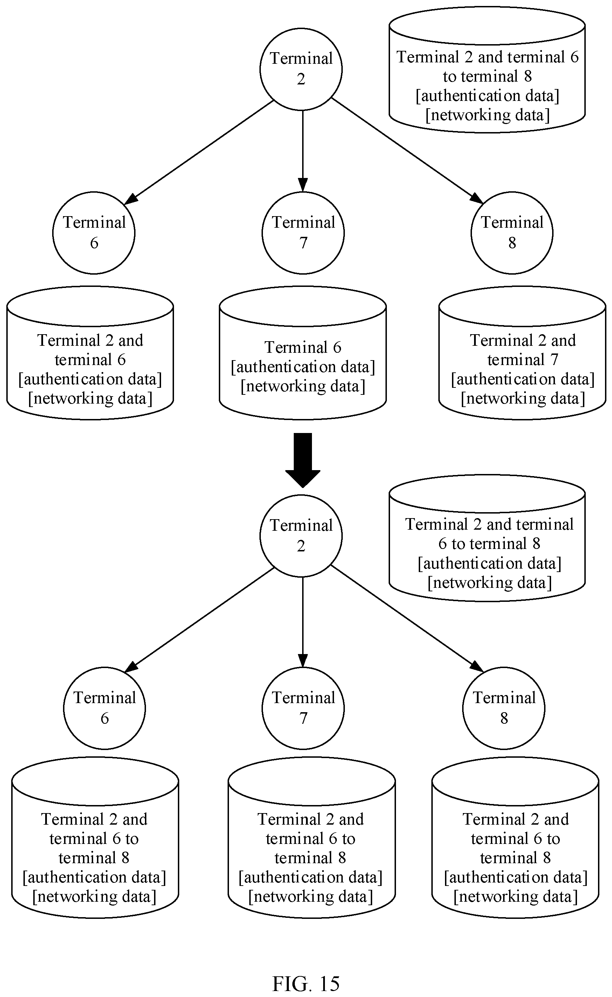

For example, a terminal 2 and a terminal 6, a terminal 7, and a terminal 8 in a terminal set shown in FIG. 10 are used as an example. The terminal 2 may exchange data with the terminal 6, the terminal 7, and the terminal 8 in a manner described in S1301 (as shown in FIG. 14A to FIG. 14C), and then configure a central device or a leaf device in a manner described in S1302 (as shown in FIG. 15).

Before networking, each of the terminal 2, the terminal 6, the terminal 7, and the terminal 8 stores only networking data and authentication data of the terminal. In a first round, the terminal 6 exchanges data with the terminal 7, so that the terminal 6 and the terminal 7 each store authentication data and networking data of the terminal 6 and the terminal 7. In a second round, the terminal 7 exchanges data with the terminal 8, so that the terminal 7 and the terminal 8 each store authentication data and networking data of the terminal 6, the terminal 7, and the terminal 8. In a third round, the terminal 8 exchanges data with the terminal 2, so that the terminal 2 and the terminal 8 each store authentication data and networking data of the terminal 2, the terminal 6, the terminal 7, and the terminal 8. In a fourth round, the terminal 6 exchanges data with the terminal 2, so that the terminal 6 also stores the authentication data and networking data of the terminal 2, the terminal 6, the terminal 7, and the terminal 8. In a fifth round, when the terminal 2 and the terminal 6 detect connection establishment requests of each other again, the terminal 2 and the terminal 6 do not establish a connection again because the terminal 2 and the terminal 6 have established a connection and exchanged data once, and each of the terminal 2 and the terminal 6 stores the authentication data and the networking data of a peer end.

It is assumed that after one or more rounds of connection establishment networking of every two of the terminal 2, the terminal 6, the terminal 7, and the terminal 8, as shown in FIG. 15, the terminal 2 stores the authentication data and networking data of the terminal 2, the terminal 6, the terminal 7, and the terminal 8, the terminal 6 stores the authentication data and networking data of the terminal 2 and the terminal 6, the terminal 7 stores the authentication data and networking data of the terminal 6, and the terminal 8 stores the authentication data and networking data of the terminal 2 and the terminal 7, and the terminal 2 stores a greatest quantity of networking data. Therefore, the terminal 2 serves as the central device, and the terminal 6, the terminal 7, and the terminal 8 serve as the leaf devices of the terminal 2.

When the terminal 2 becomes the central device, the terminal 2 may request to establish a connection to the terminal 6, the terminal 7, and the terminal 8, and send the authentication data and networking data of the terminal 2, the terminal 6, the terminal 7, and the terminal 8 to the terminal 6, the terminal 7, and the terminal 8, so that each of the terminal 6, the terminal 7, and the terminal 8 also obtains the authentication data and networking data of the terminal 2, the terminal 6, the terminal 7, and the terminal 8. Because any two of the terminal 2, the terminal 6, the terminal 7, and the terminal 8 have networking data of each other, the any two terminals may establish a connection and communicate with each other based on the networking data.

In some implementations, the central device may be configured in the terminal set with reference to the methods shown in FIG. 12 and FIG. 13.

In some implementations, every two of the plurality of terminals in the terminal set may exchange data with each other in the manner described in S1301, so that networking data, authentication data, or pre-synchronized data of at least two terminals is stored in at least one terminal, and then election is triggered in a manner described in S1201 to S1204, to determine the central device and the leaf device.

For example, in a terminal set shown in FIG. 9, at least some of a terminal 1, a terminal 2, a terminal 3, a terminal 4, a terminal 5, a terminal 6, a terminal 7, a terminal 8, and a terminal 9 first exchange data in a manner described in S1301, and then any terminal in the terminal set triggers election in a manner described in S1201 to S1204 and elects a central device.

For example, in a terminal set shown in FIG. 10, any terminal in the terminal set first triggers election in a manner described in S1201 to S1204 and elects a terminal 1 as a central device, and a terminal 2, a terminal 3, a terminal 4, and a terminal 5 are used as leaf devices of the terminal 1. Then, the terminal 2, a terminal 6, a terminal 7, and a terminal 8 configure the terminal 2 as a central device in a method described in S1301 and S1302 and configure the terminal 6, the terminal 7, and the terminal 8 as leaf devices of the terminal 2. Similarly, the terminal 7 is configured as a central device, and a terminal 12, a terminal 13, and a terminal 14 are configured as leaf devices of the terminal 7. The terminal 4 is configured as a central device, and a terminal 9, a terminal 10, and a terminal 11 are configured as leaf devices of the terminal 4.

In some implementations, a device type of the central device (for example, the first device) is a non-low power consumption device, or an operation mode of the central device is a non-low power consumption mode. The central device may need to establish connections with and exchange data with a plurality of leaf devices. Therefore, the central device generates higher power consumption than the leaf device. To ensure that the central device can establish connections with and exchange data with other leaf devices in a timely manner, the device type of the central device is the non-low power consumption device or the operation mode of the central device is the non-low power consumption device. In some implementations, any terminal in the terminal set may participate in election when determining that the terminal is not a low power consumption device or is not in a low power consumption mode and become the central device; or the terminal may switch from a low power consumption mode to a normal mode after becoming the central device.

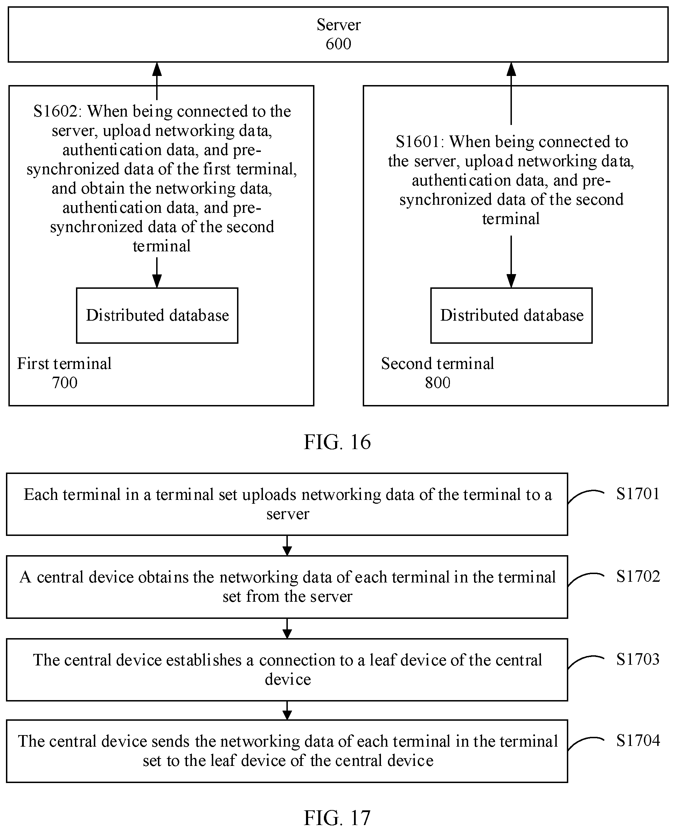

FIG. 16 is a schematic flowchart of another networking method according to an embodiment of this application. Terminals in a terminal set may exchange data via a server 600. In some implementations, the method may be used to replace S802 and S803 in the foregoing, so that the terminal set performs networking when being connected to the server 600. It should be noted that the method is not limited to a specific sequence shown in FIG. 16 and the following descriptions. It should be understood that in some embodiments, sequences of some steps of the method may be interchanged based on an actual requirement, or some steps may be omitted or deleted. The method includes the following steps.

S1601: When a second terminal 800 is connected to the server 600, upload networking data, authentication data, and pre-synchronized data of the second terminal 800 to the server 600.

The second terminal 800 may be any terminal in the terminal set.

In some implementations, a connection event between a terminal like the second terminal 800 and the server 600 may include that the terminal logs in to the server 600 (namely, a login event), the server 600 pushes a message to the terminal (namely, a message pushing event), and the terminal is powered on and connected to the server (namely, a power-on and network connection event).

In some implementations, the second terminal 800 may send a part of data of the networking data, authentication data, and pre-synchronized data of the second terminal 800 to the server 600.

S1602: When a first terminal 700 is connected to the server 600, upload networking data, authentication data, and pre-synchronized data of the first terminal 700 to the server 600, and obtain the networking data, authentication data, and pre-synchronized data of the second terminal 800 from the server 600.

The first terminal 700 may be any terminal in the terminal set other than the second terminal 800.

In some implementations, the first terminal 700 may upload a part of data of the networking data, authentication data, and pre-synchronized data of the first terminal 700 to the server 600. In some implementations, the first terminal 700 may obtain the part of data of the networking data, authentication data, and pre-synchronized data of the second terminal 800 from the server 600.

In some implementations, terminals in the terminal set belong to a same user identifier. If the first terminal 700 detects a connection event between the first terminal 700 and the server 600, the first terminal 700 may obtain, from the server 600, a part of data of networking data, authentication data, and pre-synchronized data of at least one terminal belonging to the user identifier.

In this embodiment of this application, any terminal in the terminal set can upload networking data, authentication data, and pre-synchronized data of the terminal to the server 600 when being connected to the server 600, and obtain networking data, authentication data, and pre-synchronized data of at least one other terminal in the terminal set from the server 600. In other words, any two terminals in the terminal set may complete data exchange and data synchronization via the server 600, without establishing a connection between the any two terminals. This reduces a quantity times for establishing connections between terminals in the networking process, and improves networking efficiency.

It may be learned from the foregoing descriptions that in the method shown in FIG. 8, each terminal in the terminal set may exchange the data via the central device, and in the method shown in FIG. 16, each terminal in the terminal set exchanges the data via the server 600. In some implementations, the methods shown in FIG. 8 and FIG. 16 may be combined. In some implementations, each terminal in the terminal set may first obtain, in the method shown in FIG. 16, authentication data, networking data, and pre-synchronized data of another terminal; and then if the connection event with the server 600 is not detected, obtain, in the method shown in FIG. 8, the authentication data, networking data, and pre-synchronized data of the another terminal.

FIG. 17 is a schematic flowchart of another networking method according to an embodiment of this application. The method may be obtained by combining the methods shown in FIG. 8 and FIG. 16. It should be noted that the method is not limited to a specific sequence shown in FIG. 17 and the following descriptions. It should be understood that in some embodiments, sequences of some steps of the method may be interchanged based on an actual requirement, or some steps may be omitted or deleted. The method includes the following steps.

S1701: Each terminal in a terminal set uploads networking data of the terminal to a server.

In some implementations, a manner in which each terminal performs S1701 may be the same as or similar to a manner in which the second terminal uploads the networking data to the server in S1601.

S1702: A central device obtains the networking data of each terminal in the terminal set from the server.

In some implementations, a manner in which the central device performs S1702 may be the same as or similar to a manner in which the first terminal obtains the networking data of the second terminal or networking data of another terminal from the server in S1602.

S1703: The central device establishes a connection to a leaf device of the central device.

In some implementations, for a manner in which the central device performs S1703, refer to the related descriptions in S1101.

S1704: The central device sends the networking data of each terminal in the terminal set to the leaf device of the central device.

In some implementations, for a manner in which the central device performs S1704, refer to the related descriptions in S1102.

In some implementations, S1703 may be performed before S1701 and S1702, and then S1704 is performed.

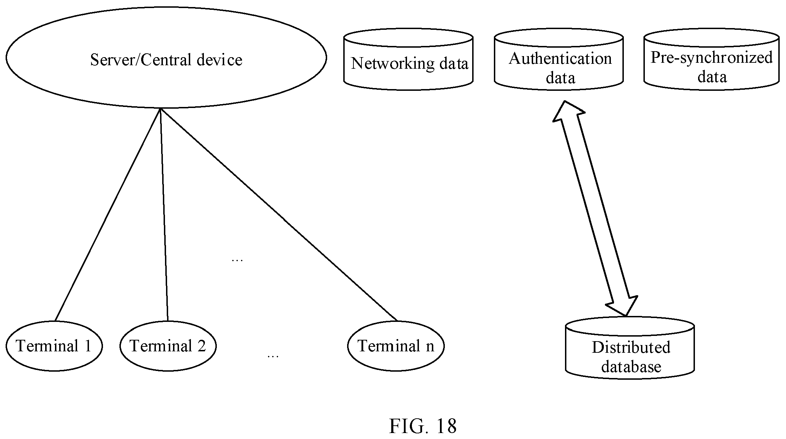

With reference to the methods shown in FIG. 8, FIG. 16, and FIG. 17, in this embodiment of this application, as shown in FIG. 18, the server or the central device in the terminal set can obtain networking data, authentication data, and pre-synchronized data of at least one terminal in the terminal set. Each device in the terminal set can obtain networking data, authentication data, and pre-synchronized data of another terminal via the server or the central device, without establishing a connection to the another terminal. This reduces a quantity times of establishing connections between terminals, and improves networking efficiency.

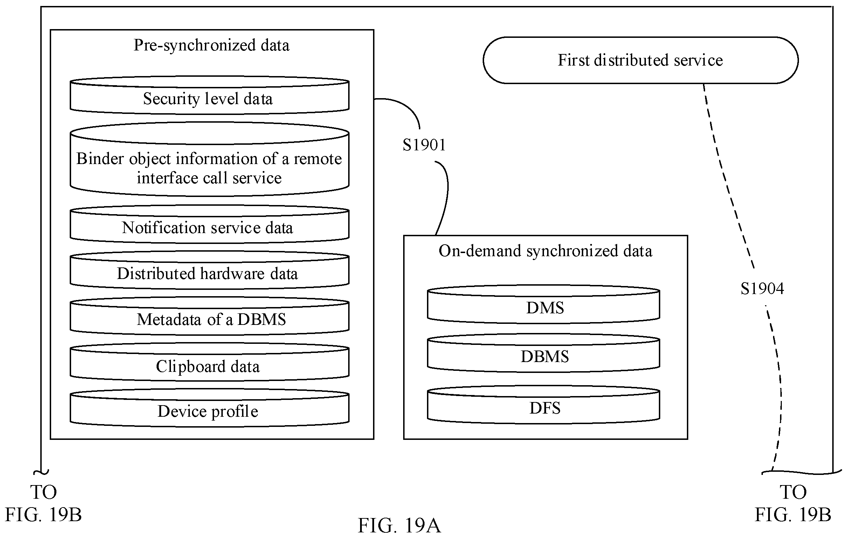

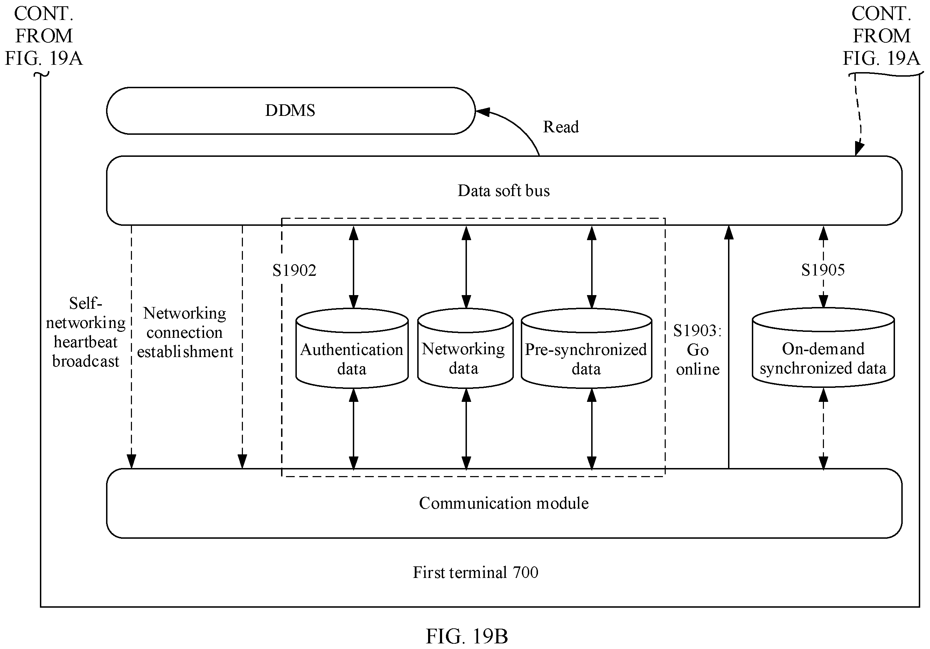

FIG. 19A and FIG. 19B are a schematic flowchart of another networking method according to an embodiment of this application. The method may be used as a detailed description of the method shown in FIG. 8. It should be noted that the method is not limited to a specific sequence shown in FIG. 19A and FIG. 19B and the following descriptions. It should be understood that in some embodiments, sequences of some steps of the method may be interchanged based on an actual requirement, or some steps may be omitted or deleted.

S1901: A first terminal 700 determines pre-synchronized data of the first terminal 700.

The first terminal 700 may be any terminal in a terminal set. The first terminal 700 may determine, as the pre-synchronized data, at least a part of distributed service data of a distributed service that is collaboratively executed with another terminal.

In some implementations, a first distributed task is used as an example. The first terminal 700 may determine an update frequency of a first part of first distributed service data. If the update frequency of the first part of data is less than a first update frequency, the first terminal 700 sets the first part of data as the pre-synchronized data of the first terminal 700. In some implementations, the first update frequency may be preset. For example, as shown in FIG. 19A and FIG. 19B, the first terminal 700 may determine one or more of clipboard data, a device profile, metadata of a DBMS, distributed hardware data, notification service data, binder object information of a remote interface call service, security level data, and the like as the pre-synchronized data.

In some implementations, related technical engineers may configure at least a part of the distributed service data as the pre-synchronized data. Alternatively, in some other implementations, the pre-synchronized data may be determined in another manner.

S1902: The first terminal 700 exchanges data with a second terminal 800 (not shown in FIG. 19A and FIG. 19B).

The second terminal 800 may be any terminal in the terminal set other than the first terminal 700.

In some implementations, the first terminal 700 may establish a first connection to the second terminal 800, and through the first connection, send one or more of networking data, authentication data, and the pre-synchronized data of the first terminal 700 to the second terminal 800 and receive one or more of networking data, authentication data, and pre-synchronized data of the second terminal 800 sent by the second terminal 800. In some implementations, the first terminal 700 may send a self-networking heartbeat broadcast to the second terminal 800. If receiving the self-networking heartbeat broadcast, the second terminal 800 may establish the first connection to the first terminal 700. Alternatively, in some other implementations, the first terminal 700 and the second terminal 800 may trigger networking and establish the first connection in another manner.

In some implementations, the first terminal 700 may obtain the one or more of the networking data, authentication data, and pre-synchronized data of the second terminal 800 from a central device or a server 600 (not shown in FIG. 19A and FIG. 19B) in a manner shown in FIG. 8, FIG. 16, or FIG. 17. The second terminal 800 may obtain the one or more of the networking data, authentication data, and pre-synchronized data of the first terminal 700 from the central device or the server 600. In some implementations, the first terminal 700 is a central device, and the second terminal 800 is a leaf device of the first terminal 700. The first terminal 700 may establish the first connection to the second terminal 800, and through the first connection, the first terminal 700 sends a first data set to the second terminal 800 and receives a second data set sent by the second terminal 800. When the first terminal 700 and the second terminal 800 exchange data via the central device or the server 600, the first terminal 700 and the second terminal 800 may not establish the first connection. This can improve networking efficiency.

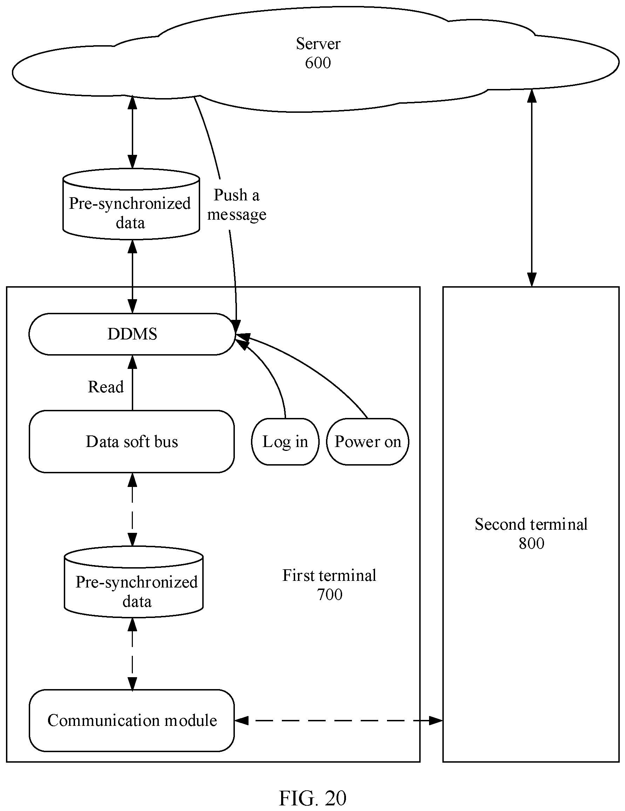

In some implementations, data synchronization is used as an example. The first terminal 700 may first synchronize data with the second terminal 800 via the server 600, as shown by a solid line part in FIG. 20. When the first terminal 700 cannot synchronize the data with the second terminal 800 via the server 600, the first terminal 700 establishes the connection to the second terminal 800, and synchronizes the data with the second terminal 800, as shown by a dashed line part in FIG. 20. For example, refer to FIG. 20. When detecting a connection event with the server 600, for example, a login event, a power-on event, or a message pushing event of the server 600, the first terminal 700 sends the pre-synchronized data of the first terminal 700 to the server 600, and obtains pre-synchronized data of the second terminal 800 (or another terminal belonging to a same account as the first terminal 700). Alternatively, the first terminal 700 may establish the first connection to the second terminal 800 via a communication module, and through the first connection, send the pre-synchronized data of the first terminal 700 to the second terminal 800 and receive the pre-synchronized data of the second terminal 800 sent by the second terminal 800. When the first terminal 700 and the second terminal 800 synchronize the data via the server 600, the first terminal 700 and the second terminal 800 do not need to establish the first connection further for data synchronization. This reduces a quantity times for establishing connections between the first terminal 700 and the second terminal 800, and saves a link resource.

In some implementations, before sending pre-synchronized data to another device, the first terminal 700, the second terminal 800, and the server 600 may compress the pre-synchronized data, and send the compressed pre-synchronized data to the another device. Correspondingly, the another device may receive the compressed pre-synchronized data and perform decompressing to obtain the pre-synchronized data.

S1903: The first terminal 700 notifies the second terminal 800 that the first terminal 700 goes online.

Before notifying the second terminal 800 of going online, the first terminal 700 may synchronize the data with the second terminal 800, so that after going online, the first terminal 700 interacts with the second terminal 800 and processes the distributed service based on the synchronized pre-synchronized data. This reduces a frequency of establishing a connection to the second terminal 800 for data synchronization after the first terminal 700 goes online, improves efficiency of networking the first terminal 700 with the second terminal 800 and an online rate and processing efficiency of the distributed service, saves a device resource like a link occupied by data synchronization, and ensures a success rate of a connection established when the first terminal 700 and the second terminal 800 process another distributed service.

In some implementations, after sending the pre-synchronized data of the first terminal 700 to the second terminal 800, the first terminal 700 may notify the second terminal 800 that the first terminal 700 goes online.

S1904: The first terminal 700 and the second terminal 800 execute the first distributed service based on the pre-synchronized data of the first terminal 700 and/or the pre-synchronized data of the second terminal 800.

The first distributed service is collaboratively executed by the first terminal 700 and the second terminal 800.

Before going online, the first terminal 700 synchronizes the data with the second terminal 800, so that the first terminal 700 obtains the pre-synchronized data of the second terminal 800, and the second terminal 800 obtains the pre-synchronized data of the first terminal 700. Therefore, after going online, the first terminal 700 may process the first distributed service based on the synchronized pre-synchronized data of the first terminal 700 and/or the synchronized pre-synchronized data of the second terminal 800, without synchronizing with the second terminal 800 again.

In some implementations, S1804 may be omitted.

S1905: In response to a request triggered by a fourth distributed service for the first terminal 700 to synchronize target data with the second terminal 800 and the target data being not the pre-synchronized data, the first terminal 700 synchronizes the target data with the second terminal 800.

The fourth distributed service is collaboratively executed by the first terminal 700 and the second terminal 800.

After the first terminal 700 notifies the second terminal 800 of going online, if the first terminal 700 detects the request triggered by the fourth distributed service for synchronizing the target data with the second terminal 800, the first terminal 700 may determine, based on whether the target data is the pre-synchronized data that has been synchronized before the first terminal 700 goes online, whether to respond to the request. In some implementations, if the target data is the pre-synchronized data of the first terminal 700, that is, the target data belongs to the first data set, the first terminal 700 may not respond to the request, that is, not synchronize the pre-synchronized data with the second terminal 800 again after going online. In some implementations, if the target data is not the pre-synchronized data of the first terminal 700, that is, the target data does not belong to the first data set, the first terminal 700 may establish a second connection to the second terminal 800, and synchronize the target data to the second terminal 800 based on the second connection. For example, the first terminal 700 may send the target data to the second terminal 800.

In some implementations, the first terminal 700 establishes a second connection to the second terminal in response to a request that is of the first distributed service and that is for synchronization with the second terminal; and sends a second part of data of the first distributed service to the second terminal based on the second connection, where the second part data does not belong to the first data set.

In some implementations, S1905 may be omitted. That is, after going online, the first terminal 700 does not respond to the request for synchronizing the target data, regardless of whether the target data requested to be synchronized is pre-synchronized data. This further saves a device resource like a link occupied by data synchronization, and ensures a success rate of a connection established when the first terminal 700 and the second terminal 800 process another distributed service.

In this embodiment of this application, the first terminal 700 can determine the pre-synchronized data of the first terminal 700, and synchronize, before notifying the second terminal 800 of going online, the pre-synchronized data with the second terminal 800 by establishing a connection once, so that after notifying the second terminal 800 of going online, the first terminal 700 and the second terminal 800 can interact with each other and process the distributed service based on the synchronized pre-synchronized data. This reduces a frequency of establishing, after the first terminal 700 goes online, a connection to the second terminal 800 to synchronize data, improves efficiency of networking the first terminal 700 with the second terminal 800 and efficiency of processing the distributed service, saves the device resource like the link occupied by data synchronization, and ensures the success rate of establishing the connection when the first terminal 700 and the second terminal 800 process the another distributed service.

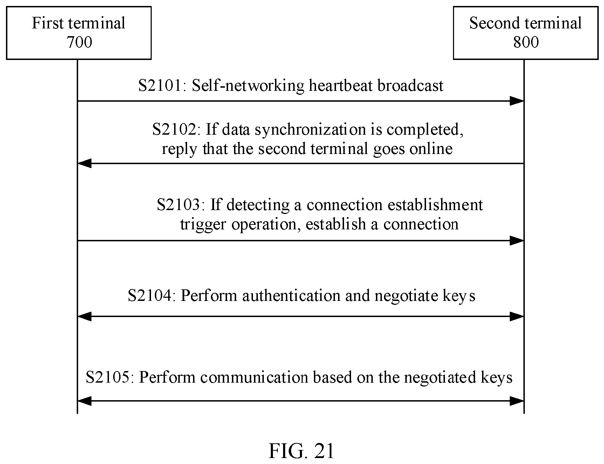

FIG. 21 is a schematic flowchart of a connection establishment method according to this embodiment of this application. The method may be used by terminals in the foregoing terminal set to negotiate keys during connection establishment. It should be noted that the method is not limited to a specific sequence shown in FIG. 21 and the following descriptions. It should be understood that in some embodiments, sequences of some steps of the method may be interchanged based on an actual requirement, or some steps may be omitted or deleted.

S2101: The first terminal 700 sends a self-networking heartbeat broadcast to the second terminal 800.

S2102: If determining that data synchronization with the first terminal 700 is completed, the second terminal 800 notifies the first terminal 700 that the second terminal 800 goes online.

The first terminal 700 and the second terminal 800 may complete networking and go online through S2101 and S2102. To improve terminal online efficiency, the first terminal 700 and the second terminal 800 may not negotiate keys before going online, but when the first terminal 700 and the second terminal 800 establish a connection for the first time after going online, the first terminal 700 and the second terminal 800 negotiate the keys and communicate with each other through S2103 and S2104.

S2103: If the first terminal 700 detects a connection establishment trigger operation, the first terminal 700 establishes the connection to the second terminal 800.

In some implementations, the connection establishment trigger operation may be performed by a user or any distributed service.

In some implementations, the connection may include the first connection or the second connection in the foregoing.

S2104: The first terminal 700 negotiates the keys with the second terminal 800.

In some implementations, the first terminal 700 may send a first key to the second terminal 800. The first key may be used to decrypt data from the first terminal 700 or encrypt data sent to the first terminal 700.

In some implementations, the first terminal 700 may obtain a second key sent by the second terminal 800. The second key may be used to decrypt data from the second terminal 800 or encrypt data sent to the second terminal 800.

In some implementations, the first terminal 700 and the second terminal 800 may also negotiate other types of keys.

S2105: The first terminal 700 and the second terminal 800 communicate with each other based on the negotiated keys.

In this embodiment of this application, the first terminal 700 and the second terminal 800 may not negotiate the keys from networking to going online, but wait to negotiate the keys when the first terminal 700 and the second terminal 800 establish the connection for the first time after going online. In other words, the step of negotiating the keys is postponed to after the first terminal 700 and the second terminal 800 go online. This improves online efficiency.

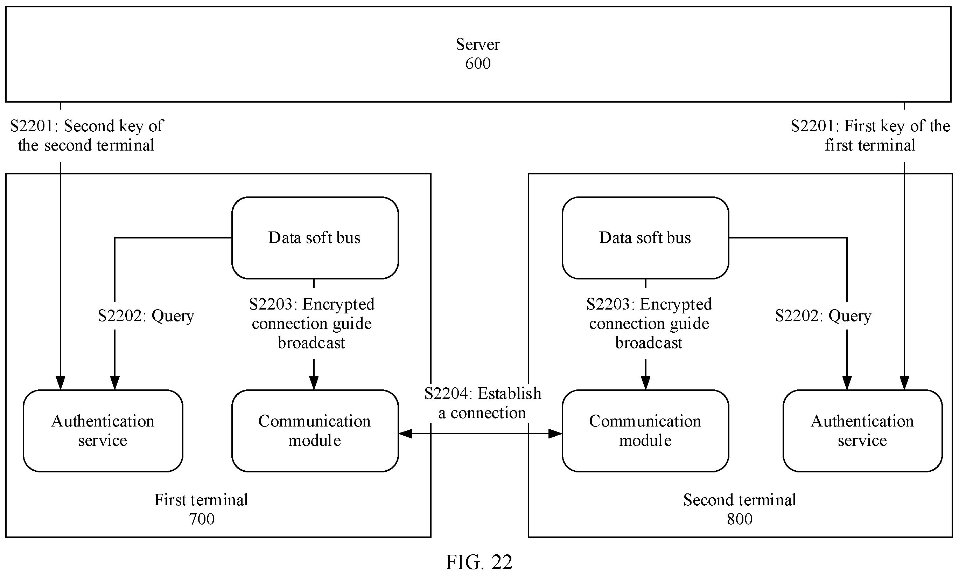

FIG. 22 is a schematic flowchart of another connection establishment method according to this embodiment of this application. The method may be used to establish a connection between terminals in the foregoing terminal set. In some implementations, the connection may include an HML. It should be noted that the method is not limited to a specific sequence shown in FIG. 22 and the following descriptions. It should be understood that in some embodiments, sequences of some steps of the method may be interchanged based on an actual requirement, or some steps may be omitted or deleted.

S2201: The first terminal 700 obtains the second key of the second terminal 800 from the server 600, and the second terminal 800 obtains the first key of the first terminal 700 from the server 600.

The first terminal 700 is used as an example. In some implementations, the first terminal 700 may obtain the second key of the second terminal 800 from the server 600 when detecting a connection event, for example, a login event, to the server 600. In some implementations, the first terminal 700 may obtain the second key of the second terminal 800 from the server 600 by using an authentication service, and store the second key.

S2202: The first terminal 700 or the second terminal 800 queries the key from the authentication service when detecting the connection establishment trigger operation.

S2203: The first terminal 700 or the second terminal 800 may send an encrypted connection guide broadcast to a peer end when the authentication service in the first terminal 700 or the second terminal 800 successfully authenticates the key.

S2204: The first terminal 700 and the second terminal 800 establish the connection.

In some implementations, the connection may include the first connection or the second connection in the foregoing.

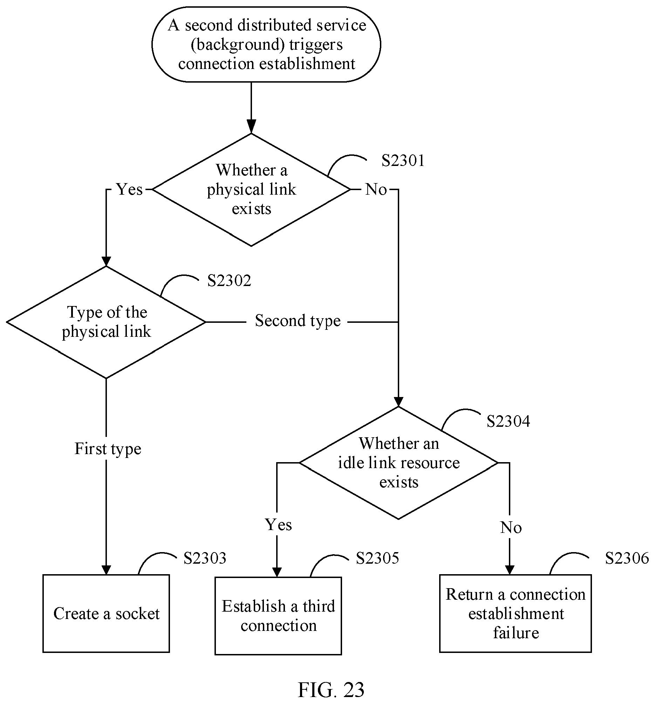

FIG. 23 is a schematic flowchart of a link resource allocation method according to an embodiment of this application. In some implementations, the method may be used as a detailed description of the foregoing S805. In some implementations, the method may be used in the following case: After the first terminal goes online, the first terminal responds to, when an idle link resource exists, a connection establishment request sent by a background service. It should be noted that the method is not limited to a specific sequence shown in FIG. 23 and the following descriptions. It should be understood that in some embodiments, sequences of some steps of the method may be interchanged based on an actual requirement, or some steps may be omitted or deleted.

S2301: If a first terminal detects a request initiated by a second distributed service, where the second distributed service is in a background of the first terminal and the request is used to request to establish a third connection to a second terminal, determine whether a physical link exists between the first terminal and the second terminal. If the physical link exists between the first terminal and the second terminal, perform 2302; or otherwise, perform 2304.

The second distributed service is collaboratively executed by the first terminal and the second terminal, and the first terminal and the second terminal may be any two terminals in a terminal set.

In some implementations, the third connection may include the first connection or the second connection in the foregoing.

S2302: The first terminal determines a type of the physical link. If the type of the physical link is a first type, perform S2303; or if the type of the physical link is a second type, perform S2304.

In some implementations, the first type may include Wi-Fi or a USB, and the second type may include a BR type.

S2303: The first terminal creates a socket (socket).

S2304: The first terminal determines whether an idle link resource exists. If the idle link resource exists, perform S2305; or otherwise, perform S2306.

In some implementations, the second connection type includes a BR type, and a second-type link resource may include an RFCOM.

S2305: The first terminal establishes the third connection to the second terminal.

In some implementations, the first terminal may establish a connection with a higher transmission speed to the second terminal based on transmission speeds corresponding to a plurality of types of connections. If the connection with the higher transmission speed cannot be established, the first terminal establishes a connection with a lower transmission speed. For example, the first terminal may first establish an HML-type connection to the second terminal. If the HML connection cannot be established, the first terminal establishes a point to point (point to point, P2P)-type connection to the second terminal. If the P2P-type connection still cannot be established, the first terminal establishes a BR-type connection to the second terminal.

S2306: The first terminal returns a connection establishment failure to the second distributed service.

In this embodiment of this application, when the first terminal detects the request initiated by the second distributed service, where the second distributed service is in the background of the first terminal and the request is used to request to establish the connection to the second terminal, the first terminal may determine whether the idle link resource exists currently. When the idle link resource does not exist, the first terminal may not respond to the request, to limit a link resource occupied by the distributed service in the background.

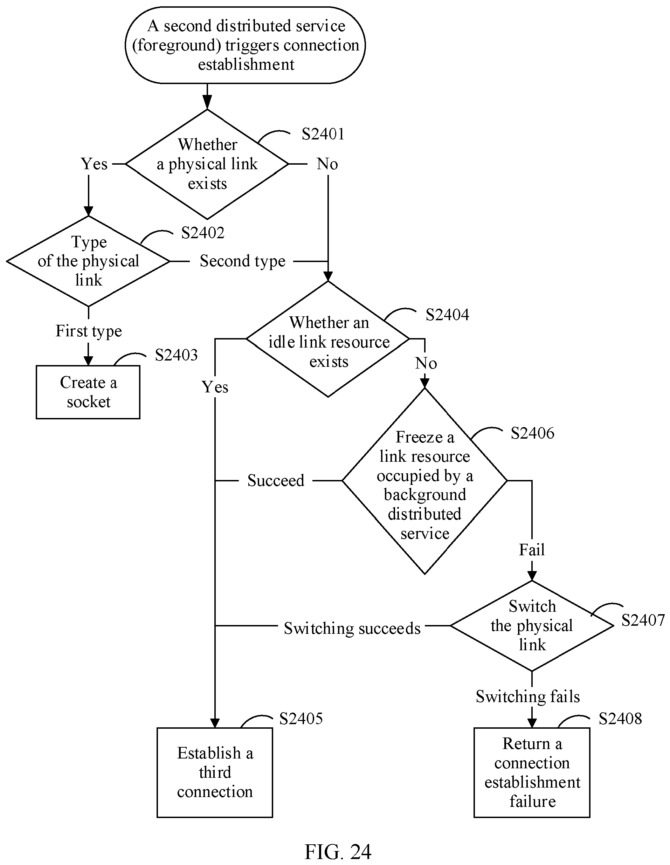

FIG. 24 is a schematic flowchart of another link resource allocation method according to an embodiment of this application. In some implementations, the method may be used as a detailed description of the foregoing S805. In some implementations, the method may be used in the following case: After the first terminal goes online, the first terminal responds to, when an idle link resource exists, a connection establishment request sent by a foreground service or triggered by a user, and freezes, when the idle link resource does not exist, a link resource occupied by a part of background services, and then responds to the request. The first terminal may be any terminal in a terminal set. It should be noted that the method is not limited to a specific sequence shown in FIG. 24 and the following descriptions. It should be understood that in some embodiments, sequences of some steps of the method may be interchanged based on an actual requirement, or some steps may be omitted or deleted.

S2401: If the first terminal detects a request initiated by a second distributed service, where the second distributed service is in a foreground of the first terminal and the request is used to request to establish a third connection to a second terminal, determine whether a physical link exists between the first terminal and the second terminal. If the physical link exists, perform S2402; or otherwise, perform S2404.

The second distributed service is collaboratively executed by the first terminal and the second terminal, and the first terminal and the second terminal may be any two terminals in the terminal set.

In some implementations, the third connection may include the first connection or the second connection in the foregoing.

S2402: The first terminal determines a type of the physical link. If the type of the physical link is a first type, perform S2403; or if the type of the physical link is a second type, perform S2404.

S2403: The first terminal creates a socket.

S2404: The first terminal determines whether an idle link resource exists. If the idle link resource exists, perform S2405; or otherwise, perform S2406.

S2405: The first terminal establishes the third connection to the second terminal.

S2406: The first terminal freezes a link resource occupied by the background distributed service. If freezing succeeds, perform S2405; or otherwise, perform S2407.

In some implementations, the first terminal may freeze a link resource occupied by a third distributed service, where the third distributed service is any distributed service in a background of the first terminal, the third distributed service is collaboratively executed by the first terminal and a fourth terminal, and the fourth terminal is any terminal in the terminal set other than the first terminal and the second terminal. In some implementations, the first terminal may disconnect a fourth connection that is between the first terminal and the fourth terminal and that is requested to be established by the third distributed service.

S2407: The first terminal switches a physical link. If switching succeeds, perform S2405; or otherwise, perform S2408.

S2408: The first terminal returns a connection establishment failure to the third distributed service.

In some implementations, after the first terminal freezes the link resource occupied by the third distributed service and creates a connection to the second terminal, if the first terminal detects an idle link resource, the first terminal may resume the fourth connection established for the third distributed service.

In this embodiment of this application, when the first terminal detects the request initiated by the second distributed service, where the second distributed service is in the foreground of the first terminal and the request is used to request to establish the third connection to the second terminal, the first terminal may determine whether the idle link resource exists currently. When the idle link resource does not exist, the first terminal can freeze a link resource occupied by at least a part of a distributed service in the background, and establish the third connection to the second terminal in response to the request. This improves a success rate of establishing a connection triggered by a distributed service in the foreground.

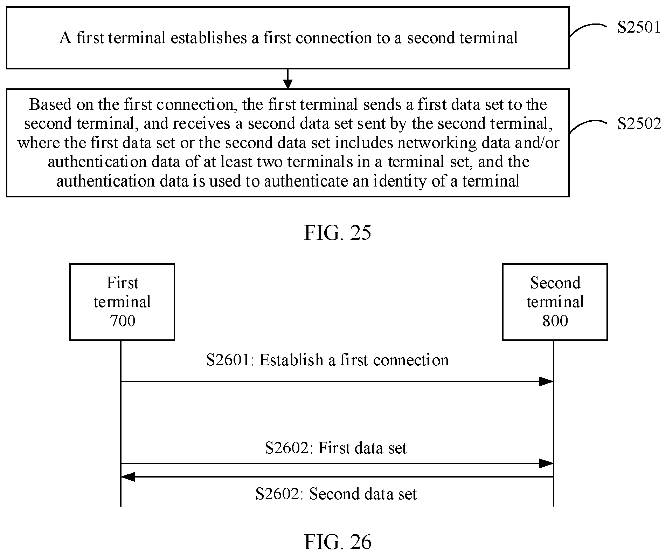

FIG. 25 is a schematic flowchart of another networking method according to an embodiment of this application. The method may be used for networking between a first terminal and a second terminal in a terminal set, where the terminal set includes at least three terminals, and the first terminal and the second terminal are any two terminals in the terminal set. It should be noted that the method is not limited to a specific sequence shown in FIG. 25 and the following descriptions. It should be understood that in some embodiments, sequences of some steps of the method may be interchanged based on an actual requirement, or some steps may be omitted or deleted. The method includes the following steps.

S2501: The first terminal establishes a first connection to the second terminal.

In some implementations, a manner in which the first terminal and the second terminal perform S2501 may be the same as or similar to a manner in which the central device establishes the first connection to the leaf device in S1101.

S2502: Based on the first connection, the first terminal sends a first data set to the second terminal, and receives a second data set sent by the second terminal, where the first data set or the second data set includes networking data and/or authentication data of at least two terminals in the terminal set, and the authentication data is used to authenticate an identity of a terminal.

In some implementations, a manner in which the first terminal and the second terminal perform S2502 may be the same as or similar to a manner in which the central device exchanges the data with the leaf device in S1102.

In this embodiment of this application, the first terminal can establish the first connection to the second terminal, send the first data set to the second terminal, and receive the second data set sent by the second terminal. The first data set or the second data set includes networking data and/or authentication data of at least two terminals in the terminal set. In other words, the first terminal or the second terminal obtains the networking data and/or authentication data of the at least two terminals without establishing connections to all the at least two terminals. This significantly reduces a quantity times for establishing connections between terminals in the terminal set in a networking process, and improves networking efficiency.

FIG. 26 is a schematic flowchart of another networking method according to an embodiment of this application. The method may be used for networking between a first terminal 700 and a second terminal 800 in a terminal set, where the terminal set includes at least three terminals, and the first terminal 700 and the second terminal 800 are any two terminals in the terminal set. It should be noted that the method is not limited to a specific sequence shown in FIG. 26 and the following descriptions. It should be understood that in some embodiments, sequences of some steps of the method may be interchanged based on an actual requirement, or some steps may be omitted or deleted. The method includes the following steps.

S2601: The first terminal 700 and the second terminal 800 establish a first connection.

In some implementations, a manner in which the first terminal 700 and the second terminal 800 perform S2601 may be the same as or similar to a manner in which the central device establishes the first connection to the leaf device in S1101.

S2602: The first terminal 700 sends a first data set to the second terminal 800 based on the first connection, and the second terminal 800 sends a second data set to the first terminal 700 based on the first connection. The first data set or the second data set includes one or more of networking data, authentication data, and/or pre-synchronized data of the at least two terminals in the terminal set, where the authentication data is used to authenticate an identity of the terminal.

In some implementations, a manner in which the first terminal 700 and the second terminal 800 perform S2602 may be the same as or similar to a manner in which the central device exchanges the data with the leaf device in S1102.

In this embodiment of this application, the first terminal 700 can establish the first connection to the second terminal 800, send the first data set to the second terminal 800, and receive the second data set sent by the second terminal 800. The first data set or the second data set includes networking data and/or authentication data of at least two terminals in the terminal set. In other words, the first terminal 700 or the second terminal 800 obtains the networking data and/or authentication data of the at least two terminals without establishing connections to all the at least two terminals. This significantly reduces a quantity times for establishing connections between terminals in the terminal set in a networking process, and improves networking efficiency.

Based on a same inventive idea, an embodiment of this application further provides a terminal. The terminal includes a memory and a processor. The memory is configured to store a computer program. The processor is configured to perform the method in the foregoing method embodiment when invoking the computer program.

The terminal provided in this embodiment may perform the foregoing method embodiment. Implementation principles and technical effect thereof are similar. Details are not described herein again.

Based on a same inventive idea, an embodiment of this application further provides a chip system. The chip system includes a processor, the processor is coupled to a memory, and the processor executes a computer program stored in the memory, to implement the method in the foregoing method embodiment.

The chip system may be a single chip or a chip module including a plurality of chips.

An embodiment of this application further provides a computer-readable storage medium. The computer-readable storage medium stores a computer program. When the computer program is executed by a processor, the method in the foregoing method embodiment is implemented.

An embodiment of this application further provides a computer program product. When the computer program product runs on a terminal, the terminal is enabled to perform the method in the foregoing method embodiment.

When the foregoing integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry the computer program code to a terminal, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk drive, a magnetic disk, or an optical disc.

**In** the foregoing embodiments, descriptions of embodiments have respective focuses. For a part that is not described in detail or recorded in an embodiment, refer to related descriptions in some embodiments.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

**In** embodiments provided in this application, it should be understood that the disclosed apparatus/ device and method may be implemented in other manners. For example, the described apparatus/device embodiment is merely an example. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that the term "include"/"comprise" when used in the specification and the appended claims of this application indicates the presence of the described feature, whole, step, operation, element, and/or component, but does not preclude the presence or addition of one or more other features, wholes, steps, operations, elements, components, and/or collections thereof.

It should be further understood that the term "and/or" used in the specification and the appended claims of this application refers to any combination of one or more of associated items that are listed and all possible combinations, and includes these combinations.

As used in the specification and the appended claims of this application, the term "if" may be interpreted as "when", "once", "in response to determining", "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the descriptions of the specification and the appended claims of this application, the terms "first", "second", "third", and the like are merely intended for differentiated description, but cannot be understood as an indication or an implication of relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A networking method, applied to a first terminal in a terminal set, wherein the terminal set comprises at least three terminals, and the method comprises:
establishing a first connection to a second terminal, wherein the second terminal is any terminal in the terminal set other than the first terminal; and
based on the first connection, sending a first data set to the second terminal, and receiving a second data set sent by the second terminal, wherein the first data set or the second data set comprises networking data and/or authentication data of at least two terminals in the terminal set, and the authentication data is used to authenticate an identity of a terminal.

2. The method according to claim 1, wherein the first data set comprises networking data of each terminal in the terminal set and/or authentication data of each terminal in the terminal set.

3. The method according to claim 1 or 2, wherein before establishing the first connection to the second terminal, the method further comprises:
generating a challenge value of the first terminal;
sending the challenge value to at least one terminal in the terminal set; and
when an election success message sent by a third terminal is not received within first duration starting from a moment at which the challenge value is sent, setting the first terminal as a central device, wherein the third terminal is any terminal that receives the challenge value in the terminal set.

4. The method according to claim 1 or 2, wherein the method further comprises:
generating a challenge value of the first terminal;
sending the challenge value to at least one terminal in the terminal set; and
when an election success message sent by a third terminal is received within the first duration starting from a moment at which the challenge value is sent, setting the first terminal as a leaf device of the third terminal, wherein the third terminal is any terminal that receives the challenge value in the terminal set.

5. The method according to any one of claims 2 to 4, wherein a quantity of networking data stored by the first terminal is greater than a quantity of networking data stored by the second terminal.

6. The method according to any one of claims 2 to 5, wherein the first terminal is a non-low power consumption device, or an operation mode of the first terminal is a non-low power consumption mode.

7. The method according to any one of claims 1 to 6, wherein the first data set or the second data set comprises pre-synchronized data of the at least two terminals in the terminal set, the pre-synchronized data is used by the terminals to execute a distributed service, and the distributed service is a service collaboratively executed by the at least two terminals.

8. The method according to claim 7, wherein the first data set comprises pre-synchronized data of each terminal in the terminal set.

9. The method according to claim 7 or 8, wherein the first data set comprises pre-synchronized data of the first terminal, and after sending the first data set to the second terminal, the method further comprises:
notifying the second terminal that the first terminal goes online; and
executing a first distributed service based on the pre-synchronized data of the first terminal, wherein the first distributed service is collaboratively executed by the first terminal and the second terminal.

10. The method according to claim 9, wherein before sending the first data set to the second terminal, the method further comprises:
if an update frequency of a first part of data of the first distributed service is less than a first update frequency, setting the first part of data as the pre-synchronized data of the first terminal.

11. The method according to claim 9 or 10, wherein after notifying the second terminal that the first terminal goes online, the method further comprises:
establishing a second connection to the second terminal in response to a request that is of the first distributed service and that is for synchronization with the second terminal; and
sending a second part of data of the first distributed service to the second terminal based on the second connection, wherein the second part of data does not belong to the first data set.

12. The method according to any one of claims 1 to 11, wherein the method further comprises one or more of the following:
when being connected to a server, sending at least a part of data of the first data set to the server, wherein the connection comprises that the first terminal logs in to the server, the first terminal is powered on and connected to the server, and the server pushes a message to the first terminal; and
obtaining at least a part of data of the second data set from the server.

13. The method according to any one of claims 1 to 12, wherein the method further comprises:
in response to a request that is initiated by a second distributed service and that is for establishing a third connection to the second terminal, wherein the second distributed service is in a foreground of the first terminal and the first terminal does not have an idle link resource, disconnecting a fourth connection between the first terminal and a fourth terminal, wherein the second distributed service is collaboratively executed by the first terminal and the second terminal, the fourth terminal is any terminal in the terminal set other than the first terminal and the second terminal, the fourth connection is created by a third distributed service in a background of the first terminal, and the third distributed service is collaboratively executed by the first terminal and the fourth terminal; and
establishing the third connection.

14. The method according to claim 13, wherein after establishing the third connection, the method further comprises:
if the first terminal has the idle link resource, resuming the fourth connection.

15. A networking method, applied to a first terminal and a second terminal in a terminal set, wherein the terminal set comprises at least three terminals, and the method comprises:
establishing, by the first terminal, a first connection to the second terminal;
sending, by the first terminal, a first data set to the second terminal based on the first connection; and
sending, by the second terminal, a second data set to the first terminal based on the first connection, wherein
the first data set or the second data set comprises networking data and/or authentication data of at least two terminals in the terminal set, and the authentication data is used to authenticate an identity of a terminal.

16. The method according to claim 15, wherein the first data set comprises networking data of each terminal in the terminal set and/or authentication data of each terminal in the terminal set.

17. The method according to claim 15 or 16, wherein a quantity of networking data stored by the first terminal is greater than a quantity of networking data stored by the second terminal.

18. The method according to any one of claims 15 to 17, wherein the first data set or the second data set comprises pre-synchronized data of the at least two terminals in the terminal set, the pre-synchronized data is used by the terminals to execute a distributed service, and the distributed service is a service collaboratively executed by the at least two terminals.

19. The method according to claim 18, wherein the first data set comprises pre-synchronized data of the first terminal, and after sending the first data set to the second terminal, the method further comprises:
notifying the second terminal that the first terminal goes online; and
executing a first distributed service based on the pre-synchronized data of the first terminal, wherein the first distributed service is collaboratively executed by the first terminal and the second terminal.

20. The method according to claim 19, wherein before sending the first data set to the second terminal, the method further comprises:
if an update frequency of a first part of data of the first distributed service is less than a first update frequency, setting the first part of data as the pre-synchronized data of the first terminal.

21. A terminal, comprising a memory and a processor, wherein the memory is configured to store a computer program, and the processor is configured to perform the method according to any one of claims 1 to 14 when invoking the computer program.

22. A computer-readable storage medium, wherein the computer-readable storage medium stores a computer program, and when the computer program is executed by a processor, the method according to any one of claims 1 to 14 is implemented.

23. A computer program product, wherein when the computer program product runs on a terminal, the terminal is enabled to perform the method according to any one of claims 1 to 14.
